# EUROPÄISCHE PATENTSCHRIFT

(11) **EP 0 703 934 B1**
(45) Veröffentlichungstag und Bekanntmachung des Hinweises auf die Patenterteilung: **06.02.2002**
(21) Anmeldenummer: 95915878.3
(22) Anmeldetag: 14.04.1995
(51) Int. Cl.: C08G 18/08, C08G 18/12, C08G 18/28, C08G 18/38, C08G 18/50, C08G 18/32, C09D 175/04

(54) **VERFAHREN ZUR HERSTELLUNG DEKORATIVER MEHRSCHICHTLACKIERUNGEN**
PROCESS FOR PRODUCING DECORATIVE MULTIPLE-LAYER VARNISH COATINGS
PROCEDE DE PRODUCTION DE VERNIS MULTICOUCHES DECORATIFS

(30) Priorität: 19.04.1994 DE 4413562
(43) Veröffentlichungstag der Anmeldung: 03.04.1996
(73) Patentinhaber: E.I. DU PONT DE NEMOURS AND COMPANY, Wilmington Delaware 19898 (US)
(72) Erfinder: VOGT-BIRNBRICH, Bettina, D-42719 Solingen (DE); PATZSCHKE, Hans-Peter, D-42279 Wuppertal (DE); LENHARD, Werner, D-42289 Wuppertal (DE); DÖBERT, Jürgen, D-45549 Sprockhövel (DE); BRUNNER, Marcus, D-42283 Wuppertal (DE)
(74) Vertreter: Gille Hrabal Struck Neidlein Prop Roos
(86) Internationale Anmeldenummer: EP9501410
(87) Internationale Veröffentlichungsnummer: WO9528428

(56) Entgegenhaltungen:
- EP-A- 0 163 214
- EP-A- 0 315 006
- WO-A-94/13723
- US-A- 3 941 733

## Beschreibung

Die Erfindung betrifft ein Verfahren zur Herstellung dekorativer Mehrschichtlackierungen vom Typ Wasserbasislack/Klarlack.

Eine Vielzahl von Wasserbasislacken ist bekannt geworden, die wegen ihrer hervorragenden Eigenschaften als Bindemittel wäßrige Polyurethandispersionen enthalten. Die den Polyurethandispersionen zugrunde liegenden Polyurethanharze können auf verschiedenartigste Weise kettenverlängert sein.
WO-A-94 13723 beschreibt steinschlagfeste Mehrschichtlackierungen. So beschreiben beispielsweise die EP-A-0 089 497, EP-A-0 228 003, DE-A-36 28 124 und die EP-A-0 512 524 Wasserbasislacke, die als Bindemittel wäßrige Polyurethandispersionen enthalten, die durch Kettenverlängerung isocyanatfunktioneller Prepolymerer mit Polyamin und/oder Polyol hergestellt werden können.

Die DE-A-39 15 459 und DE-A-42 24 617 liefern Beispiele für Wasserbasislacke, die als Bindemittel wäßrige Polyurethandispersionen enthalten, die durch Kettenverlängerung isocyanatfunktioneller Prepolymerer mit Wasser hergestellt werden können.

Beispiele für Wasserbasislacke auf Basis von wäßrigen Polyurethandispersionen, die durch Kettenverlängerung von gegenüber Polyisocyanaten reaktiven, aktiven Wasserstoff enthaltenden PU-Prepolymeren mit Polyisocyanaten hergestellt werden können, findet man in DE-A-39 03 804 und DE-A-40 01 841.

Unter Verwendung der auf Basis bekannter Polyurethandispersionen formulierten Wasserbasislacke hergestellte Mehrschichtlackierungen sind verbesserungsbedürftig hinsichtlich ihrer Beständigkeit gegen Schwitzwasser. Werden die bekannten Polyurethandispersionen als Alleinbindemittel in wäßrigen Effektbasislacken eingesetzt, so ist die Effektausbildung im Vergleich zu mindestens ein weiteres Cobindemittel enthaltenden wäßrigen Effektbasislacken weniger günstig.

Die EP-A-0 163 214 beschreibt wäßrige selbstvernetzbare Polyurethandispersionen mit bevorzugt lateralen Silikonatgruppen. Die Herstellung und Lagerung der PU-Dispersionen erfolgt unter Bedingungen, die eine Reaktion der Silikonatgruppen untereinander bewußt verhindert. Nach der Applikation vernetzen die Bindemittel durch Kondensation der Silikonatgruppen unter Ausbildung von Siloxanbrücken.

Weitere wäßrige Lösungen oder Dispersionen von Polyurethanen mit zur Vernetzung geeigneten reaktiven Silikonatgruppen sind aus der EP-A-0 315 006 bekannt. Die dort beschriebenen Bindemittel werden durch die Reaktion von Isocyanatgruppen von Isocyanatprepolymeren mit Aminogruppen aufgebaut, d. h. es erfolgt eine Kettenverlängerung über Aminogruppen. Bei der Herstellung der Bindemittel wird eine große Menge Wasser zugesetzt, so daß aufgrund des Massenwirkungsgesetzes praktisch keine Siloxanbrücken entstehen.

Sowohl der EP-A-0 163 214 als auch der EP-A-0 315 006 sind keine Hinweise zu entnehmen, daß die dort beschriebenen Bindemittel geeignet sind zur Herstellung von Wasserbasislacken.

Aufgabe der vorliegenden Erfindung ist die Bereitstellung eines Verfahrens zur Herstellung dekorativer Mehrschichtlackierungen vom Wasserbasislack/Klarlack-Typ mit verbesserter Schwitzwasserfestigkeit, wobei wäßrige Polyurethanharze als Bindemittel in den Wasserbasislacken verwendet werden.

Die Aufgabe wird durch den Gegenstand des Anspruchs 1 gelöst.

Das als Bindemittel in dem im erfindungsgemäßen Verfahren eingesetzten Wasserbasislack verwendete wäßrige Polyurethanharz enthält 5 bis 200 mEqu (Milliequivalente) an ionischen Gruppen, in ionische Gruppen überführbaren Gruppen und/oder hydrophilen Gruppen pro 100 g Festharz.

Sind die in ionische Gruppen überführbaren Gruppen saure Gruppen, oder sind die ionischen Gruppen anionisch, so liegen bevorzugt über 15 und unter 100, besonders bevorzugt über 18 und unter 60 mEqu/100 g Festharz vor.

Sind die in ionische Gruppen überführbaren Gruppen basische Gruppen, oder sind die ionischen Gruppen kationisch, so liegen bevorzugt über 30 und unter 150, besonders bevorzugt über 45 und unter 100 mEqu/100 g Festharz vor.

Bei den hydrophilen Gruppen beziehen sich die 5 bis 200 mEqu auf die niedrigstmolekularen Bestandteile solcher Gruppen, also beispielsweise auf Alkylenoxideinheiten in Polyalkylenoxidgruppen, z.B. auf Ethylenoxideinheiten in Polyethylenoxidgruppen (derartige Einheiten heißen auch Repetitionseinheiten).

Beispiele für in dem wäßrigen Polyurethanharz enthaltene ionische und in ionische Gruppen überführbare Gruppen und hydrophile Gruppen ergeben sich aus der folgenden Beschreibung, die die Herstellung des wäßrigen Polyurethanharzes betrifft.

Die Herstellung des wäßrigen Polyurethanharzes mit lateralen und/oder terminalen an Silizium gebundenen Hydroxyl- und/oder R'O-Gruppen kann beispielsweise erfolgen durch:
1) Herstellung eines linearen oder verzweigten, nicht gelierten, ionische Gruppen, zur Ionenbildung befähigte Gruppen und/oder hydrophile Gruppen enthaltenden sowie isocyanatfunktionellen PU-Prepolymeren in einem organischen Lösemittel oder in Abwesenheit von Lösemitteln,
2) Umsetzung der freien Isocyanatgruppen des PU-Prepolymeren mit einer oder mehreren Verbindungen der allgemeinen Formel

   ((H-X-)ₙR)ₐSi(OR')_{b}(R")_{c} (I)

   mit X = 0, S, NH oder NR'^{v}, bevorzugt NH oder NR'^{v},
   R = ein bifunktioneller, trifunktioneller oder tetrafunktioneller, bevorzugt bifunktioneller organischer Rest mit einem Molekulargewicht von 13 bis 500, bevorzugt (Ar)alkylen mit 1 bis 12 C-Atomen, besonders bevorzugt Alkylen mit 1 bis 12 C-Atomen,
   R' = C₁- bis C₈-Alkyl oder C(O)R''', bevorzugt C₁- bis C₄-Alkyl,
   R'' = R''' = C₁- bis C₁₀-Alkyl, wobei R'' und R''' gleich oder verschieden sein können,
   R'^{v} = C₁- bis C₈-Alkyl,
   a = 1, 2 oder 3, bevorzugt 1,
   b = 1, 2 oder 3, bevorzugt 2 oder 3,
   c = 0, 1 oder 2,
   n = 1 bis 3, bevorzugt 1 oder 2, besonders bevorzugt 1
   wobei mehrere Reste R', R'' und R''' gleich oder verschieden sind und worin die Summe aus a plus b plus c vier ergibt,
   gegebenenfalls im Gemisch mit einem oder mehreren NH₂- und/oder NH-Gruppen tragenden Alkanolaminen mit einer OH-Funktionalität von mindestens 1, wobei die Mengenanteile der einzelnen Edukte so gewählt werden, daß das fertige Polyurethanharz die vorstehend angegebenen Spezifikationen aufweist, und
3) Überführung des gegebenenfalls neutralisierten Reaktionsproduktes in eine wäßrige Dispersion durch Zusatz von Wasser.

Bei der Überführung des gegebenenfalls neutralisierten Reaktionsprodukts in eine wäßrige Dispersion kann das Wasser zum Harz gegeben werden. Ebenso möglich ist die Zugabe des Harzes zum Wasser. Wesentlich ist, daß innerhalb kurzer Zeit eine solche Menge an Wasser zugegeben wird, die ausreichend ist, eine weitere Reaktion der durch Hydrolyse gebildeten HOSi-Gruppen zu verhindern. Die Wasserzugabe erfolgt in mehr als zehnfachem stöchiometrischen Überschuß der zur Hydrolyse der R'OSi-Gruppen notwendigen Wassermenge. Bevorzugt wird der mindestens 50-fache stöchiometrische Überschuß zugesetzt. Besonders bevorzugt erfolgt der Wasserzusatz in einer solchen Menge, daß mindestens die Hälfte der zur Herstellung der wäßrigen Polyurethandispersion benötigten Wassermenge auf einmal zugesetzt wird. Durch Zusatz der ausreichenden Wassermenge wird eine unter Wasserabspaltung verlaufende Kondensation der durch Hydrolyse gebildeten HOSi-Gruppen zu Siloxanbrücken weitestgehend vermieden, d.h. man erhält eine wäßrige Dispersion eines Polyurethanharzes, das praktisch frei ist von Siloxanbrücken und das R'OSi- und/oder HOSi-Gruppen in einer zur Vernetzung ausreichenden Menge enthält.

Gegebenenfalls vorhandenes Lösemittel kann aus der wäßrigen Dispersion gegebenenfalls abdestilliert werden.

Bei der Herstellung des wäßrigen Polyurethanharzes werden die Mengenanteile der einzelnen Edukte so gewählt und die Reaktion so geführt, daß das fertige Polyurethanharz 10 bis 400 mmol, bevorzugt 20 bis 300 mmol, besonders bevorzugt 40 bis 200 mmol laterale und/oder terminale an Silizium gebundene Hydroxyl- und/oder R'O-Gruppen, worin
R' = C₁ bis C₈-Alkyl oder C(O)R''', und
R''' = C₁ bis C₁₀-Alkyl
bedeuten, pro 100 g Festharz enthält, ein Zahlenmittel (Mn) der Molmasse von 2500 bis 120000, eine Hydroxylzahl von 0 bis 150, bevorzugt über 1 und unter 100 mg KOH/g, bezogen auf Festharz, wobei an Silizium gebundene Hydroxylgruppen bei der Berechnung der OH-Zahl nicht mitgezählt werden, und einen Gehalt an ionischen, in ionische Gruppen überführbaren und/oder hydrophilen Gruppen von 5 bis 200 mEqu pro 100 g Festharz aufweist.

Alternativ zum vorstehend beschriebenen sequentiellen Herstellungsverfahren über NCO-Prepolymere kann die Herstellung des R'OSi-funktional isierten Polyurethanharzes auch in einem sogenannten Einstufenverfahren durchgeführt werden, d.h. die vorstehend beschriebenen Verfahrensschritte 1) und 2) können simultan durchgeführt werden, indem die dort benötigten Edukte gleichzeitig miteinander umgesetzt werden.

Bei der Auswahl der Reaktionspartner ist darauf zu achten, daß die funktionellen Gruppen -XH nicht in ihrer Reaktivität beeinträchtigt werden.

Die beispielsweise im Verfahrensschritt 1) erfolgende Herstellung des linearen oder verzweigten, nicht gelierten ionische Gruppen, zur Ionenbildung befähigte Gruppen und/oder hydrophile Gruppen enthaltenden sowie isocyanatfunktionellen PU-Prepolymeren, nachstehend auch als NCO-Gruppen enthaltendes Polyurethan-Prepolymer bezeichnet, kann beispielsweise erfolgen durch Umsetzung von einer oder mehreren Verbindungen mit mindestens zwei gegenüber Isocyanat reaktiven Gruppen, insbesondere einem oder mehreren Polyolen, bevorzugt Diolen, mit einem oder mehreren organischen Polyisocyanaten, bevorzugt Diisocyanaten und mit einer oder mehreren Verbindungen mit mehr als einer, bevorzugt zwei, mit Isocyanatgruppen reaktiven Gruppen und mindestens einer ionischen Gruppe, zur Ionenbildung befähigten Gruppe und/oder hydrophilen Gruppe.

Beispielsweise kann ein als Ausgangsprodukt für die Herstellung der PU-Dispersion verwendbares, NCO-Gruppen enthaltendes Polyurethan-Prepolymer hergestellt werden durch Umsetzung in wasserfreiem Milieu von
a) mindestens einer linearen oder verzweigten Verbindung, die mindestens zwei gegenüber Isocyanat reaktive Gruppen trägt mit einem mittleren Molekulargewicht von 60 bis 10000, bevorzugt 60 bis 6000,
b) mindestens einem organischen Polyisocyanat, insbesondere Diisocyanat,
c) mindestens einer Verbindung mit mehr als einer mit Isocyanat reaktiven Gruppe, und mindestens einer ionischen Gruppe, zur Ionenbildung befähigten Gruppe und/oder hydrophilen Gruppe, mit einer zahlenmittleren Molmasse (Mn) bis zu 10000, bevorzugt bis zu 2000, in einem NCO/OH-Verhältnis von Ober 1 bis 4 : 1.

Bevorzugt handelt es sich bei der vorstehend genannten linearen oder verzweigten Verbindung der Komponente a) um mindestens ein Polyol auf der Basis eines oder mehrerer Polyether, Polyester, Polyurethane und/oder Polycarbonate, mit mindestens zwei OH-Gruppen im Molekül und einem Zahlenmittel der Molmasse (Mn) von 600 - 10000, bevorzugt über 1000 und unter 5000, gegebenenfalls unter Mitverwendung von einem oder mehreren zumindest difunktionellen niedermolekularen Alkoholen und/oder Aminen und/oder Aminoalkoholen mit einer Molmasse unter 600, bevorzugt unter 400.

Alle Herstellungsverfahren für NCO-Gruppen enthaltende Polyurethan-Prepolymere können als Ein- oder Mehrstufenverfahren durchgeführt werden.

Das Isocyanatgruppen enthaltende PU-Prepolymer weist bevorzugt einen Gehalt von Urethan-(-NHCOO-) und gegebenenfalls Harnstoff-(-NHCONH) Gruppen zwischen 10 und 300 Milliequivalent pro 100 g Festharz auf.

Die Darstellung der wäßrigen Polyurethandispersion kann auf jeder Stufe ohne organische Lösemittel durchgeführt werden.

Die zur Herstellung des NCO-Gruppen enthaltenden PU-Prepolymeren als Komponente a) eingesetzten Verbindungen können beispielsweise eine lineare oder verzweigte Polyolkomponente, z.B. Diole sein. Es handelt sich beispielsweise um dem Fachmann geläufige Polyole, die auf dem Gebiet der PU-Chemie eingesetzt werden. Beispiele werden z.B. in der DE-A-42 28 510 beschrieben. Geht man von einer linearen Diolkomponente aus, können zum Erzielen einer Verzweigung des Polymeren Anteile an Polyolen mit einer Funktionalität von 3 oder mehr zugesetzt werden. Dabei ist die Menge so zu wählen, daß keine Gelbildung bei der Synthese des NCO-Gruppen enthaltenden PU-Prepolymeren auftritt.

In der Komponente a) können gegebenenfalls niedermolekulare Verbindungen mitverwendet werden. Es handelt sich dabei besonders um Alkohole und Amine. Beispiele sind die aus der Polyurethanchemie bekannten im Sinne einer Isocyanat-Additionsreaktion mindestens difunktionellen Hydroxyl- und/oder Aminogruppen aufweisenden Verbindungen eines unter 600, bevorzugt unter 300 liegenden Molekulargewichts. Als Verbindung kommen sowohl im Sinne der Isocyanatadditionsreaktion difunktionelle Verbindungen als auch mindestens trifunktionelle Verbindungen bzw. beliebige Gemische derartiger Verbindungen in Betracht.

Als Komponente b) können für die Herstellung der Polyurethandispersion beliebige organische Polyisocyanate, wie z.B. Diisocyanate eingesetzt werden. Es können aliphatische, cycloaliphatische, aromatische oder araliphatische, sowie auch sterisch gehinderte Isocyanate eingesetzt werden. Es können beispielsweise auch Ether- oder Estergruppen enthaltende Polyisocyanate, z.B. Diisocyanate eingesetzt werden. Beispiele für geeignete Diisocyanate sind Hexamethylendiisocyanat, 1-Isocyanatomethyl-5-isocyanato-1,3,3-trimethylcyclohexan, Bis-(4-isocyanatocyclohexyl)methan, Bis-(4-isocyanato-phenyl)-methan und Tetramethylxylylendiisocyanat.

Gegebenenfalls können auch in geringen Anteilen höherfunktionelle Isocyanate wie z.B. Polyisocyanate vom Biuret- oder Isocyanurattyp, oder Produkte, die durch Umsetzung von einem Überschuß von Diisocyanat an Polyole erhalten werden, zugesetzt werden.

Als Komponente c) können beispielsweise bevorzugt niedermolekulare, z.B. monomere, Verbindungen verwendet werden, die mehr als eine, bevorzugt zwei oder mindestens zwei mit Isocyanatgruppen reagierende Gruppen und mindestens eine ionische Gruppe, zur Ionenbildung befähigte Gruppe und/oder hydrophile Gruppe enthalten. Bevorzugt sind anionische oder anionenbildende Gruppen. Geeignete mit Isocyanatgruppen reagierende Gruppen sind insbesondere Hydroxylgruppen und primäre und sekundäre Aminogruppen. Als saure zur Anionenbildung befähigte Gruppen kommen z.B. Carboxyl-, Phosphorsäure- und Sulfonsäuregruppen in Betracht. Als basische in Kationen überführbare Gruppen kommen beispielsweise primäre, sekundäre und tertiäre Aminogruppen oder Oniumgruppen, wie quartäre Ammonium-, Phosphonium- und/oder tertiäre Sulfoniumgruppen in Betracht. Die bevorzugt einzuführenden anionischen Gruppen sind Carboxylgruppen; sie können beispielsweise durch Verwendung von Hydroxyalkancarbonsäuren der folgenden allgemeinen Formel als Komponente c) eingeführt werden:

(HO)ₓQ(COOH)_{y}

worin
Q einen geraden oder verzweigten Kohlenwasserstoffrest mit 1 bis 12 C-Atomen darstellt und
x und y jeweils 1 bis 3 bedeuten. Beispiele hierfür sind Zitronensäure und Weinsäure. Bevorzugt sind solche Carbonsäuren, worin x = 2 und y = 1 ist. Beispiele hierfür sind in der US-A-3 412 054 beschrieben. Eine bevorzugte Gruppe von Dihydroxyalkansäuren sind alpha,alpha-Dimethylolalkansäuren der allgemeinen Formel 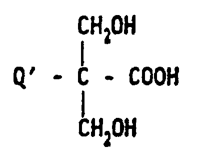 worin Q' Wasserstoff oder C₁-C₈-Alkyl ist. Die bevorzugtesten Verbindungen sind alpha,alpha-Dimethylolpropionsäure und alpha,alpha-Dimethylolbuttersäure.

Weitere Beispiele für verwendbare Dihydroxyalkansäuren sind Dihydroxypropionsäure, Dimethylolessigsäure, Dihydroxybernsteinsäure oder Dihydroxybenzoesäure.

Aminogruppenhaltige Säuren, die verwendbar sind, sind beispielsweise alpha,alpha-Diamino-valeriansäure, 3,4-Diaminobenzoesäure, 2,4-Diaminotoluol-sulfonsäure-(5) und 4,4-Diamino-di-phenylethersulfonsäure.

Als Komponente c) können auch saure Polyester wie sie in der DE-A-39 03 804 beschrieben sind, eingesetzt werden. Diese Polyester besitzen vorzugsweise ein Molekulargewicht von 300 bis 2000, eine Hydroxylzahl von 56 bis 374 und eine Säurezahl von 28 bis 187.

Als Komponente c) können auch ionische oder in ionische Gruppen überführbare Gruppen enthaltende Polyurethanpolyole eingesetzt werden.

Die Komponente c) kann auch nicht-ionische hydrophile Polyole umfassen. Es handelt sich z.B. um Verbindungen, die Polyetherketten mit eingebauten Ethylenoxideinheiten aufweisen. Es sind Verbindungen mit einem oder zwei gegenüber Isocyanaten reaktionsfähigen Wasserstoffatomen, die beispielsweise in der Seitenkette Ethylenoxid aufweisende Polyetherketten tragen oder um Gemische davon. Es handelt sich dabei beispielsweise um Verbindungen der allgemeinen Formel

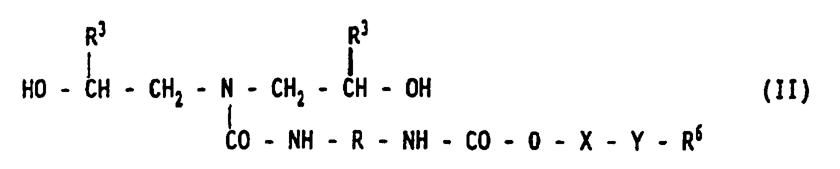

HO - X - Y - R⁶ (III)

HNR³ - X - Y - R⁶ (IV)

worin
R = der Rest, der sich aus einer Isocyanatkomponente ergibt, z.B. aus Isocyanaten, wie sie vorstehend genannt wurden,
R³ = H, lineares oder verzweigtes C₁-C₈-Alkyl,
R⁶ = C₁-C₁₂-Alkyl, bevorzugt unsubstituiertes C₁-C₄-Alkyl,
X = ein Rest, wie er durch Entfernen des endständigen Sauerstoffatoms aus einer Polyalkylenoxidkette mit 5 bis 90, vorzugsweise 20 bis 70 Kettengliedern erhalten wird, wobei die Kettenglieder zumindest zu 40 %, vorzugsweise zu 65 % aus Ethylenoxideinheiten bestehen und die neben Ethylenoxideinheiten beispielsweise auch Propylenoxid-, Butylenoxid- oder Styroloxideinheiten darstellen können,
Y = - 0 - oder - NR⁶ -, wobei R⁶ wie vorstehend definiert ist.

Die Herstellung der Verbindungen II bis IV kann z.B. analog US-A-3 920 598, US-A-3 905 929, US-A-4 190 566 oder US-A-4 237 264 erfolgen.

Die anionischen, kationischen oder nicht-ionischen Gruppen der Komponente c) dienen zur Stabilisierung der wäßrigen Dispersion. Es können ionische und nicht-ionische Gruppen gemeinsam eingesetzt werden. Bevorzugt ist eine Stabilisierung durch ionische Gruppen, besonders bevorzugt anionische Gruppen.

Zur Herstellung eines anionischen Urethanprepolymers sind die Dihydroxycarbonsäuren bevorzugt. Besonders bevorzugt ist die Dimethylolpropionsäure. Die Komponente c) wird bevorzugt in einer Menge von etwa 0,4 bis etwa 7,5 Gew.-%, besonders bevorzugt etwa 0,8 bis 5,0 Gew.-% (berechnet als Carboxylgruppe COOH), bezogen auf das eingesetzte Urethanprepolymer (Festharz), verwendet. Wenn die Carboxylgruppenmenge unter etwa 0,4 Gew.-% liegt, ist es schwierig, eine stabile Emulsion herzustellen. Wenn dagegen die Menge 7,5 Gew.-% übersteigt, verstärkt sich die hydrophile Eigenschaft, was die Emulsion hochviskos macht und die Wasserbeständigkeit der Beschichtung verringert.

Die Mengen an a), b) und c) werden so gewählt, daß bei der Umsetzung ein Umsetzungsprodukt mit lateralen und/oder terminalen NCO-Gruppen entsteht, d.h. es wird mit einem Polyisocyanatüberschuß gearbeitet. Man kann mit einem NCO- zu OH-Verhältnis von über 1 bis 4 : 1 arbeiten, bevorzugt ist der Bereich von 1,1 bis 2 : 1, besonders bevorzugt von 1,1 bis 1,7 : 1. Bevorzugt handelt es sich um Polyurethane mit weniger als 280 mEquivalenten - NHCOO - pro 100 g Festharz. Das Umsetzungsprodukt kann verzweigt aufgebaut sein, bevorzugt ist es im allgemeinen aber linear aufgebaut mit terminalen NCO-Gruppen.

Das NCO-Gruppen enthaltende Polyurethan-Prepolymer wird mit einer oder mehreren Verbindungen der allgemeinen Formel

((H-X-)ₙR)ₐSi(OR')_{b}(R'')_{c} (I)

mit X = 0, S, NH oder NR'^{v}, bevorzugt NH oder NR'^{v},
R = bifunktioneller bis tetrafunktioneller, bevorzugt bifunktioneller organischer Rest mit einem Molekulargewicht von 13 bis 500, bevorzugt (Ar)alkylen mit 1 bis 12 C-Atomen, besonders bevorzugt Alkylen mit 1 bis 12 C-Atomen,
R' = C₁- bis C₈-Alkyl oder C(O)R''', bevorzugt C₁- bis C₄-Alkyl,
R" = R" ' = C₁- bis C₁₀-Alkyl,
R'^{v} = C₁- bis C₈-Alkyl,
a = 1, 2 oder 3, bevorzugt 1,
b = 1, 2 oder 3, bevorzugt 2 oder 3,
c = 0, 1 oder 2,
n = 1 bis 3, bevorzugt 1 oder 2, besonders bevorzugt 1
und worin die Summe aus a plus b plus c vier ergibt, gegebenenfalls im Gemisch mit einem oder mehreren NH₂- und/oder NH-Gruppen tragenden Alkanolaminen mit einer OH-Funktionalität von mindestens 1, zu einem ionische Gruppen, zur Ionenbildung befähigte Gruppen und/oder hydrophile Gruppen enthaltenden, laterale und/oder terminale an Silizium gebundene R'O-Gruppen tragenden Polyurethanharz umgesetzt.

Bei den Verbindungen der allgemeinen Formel (I) handelt es sich um Silanderivate, die gegenüber Isocyanatgruppen zur Addition befähigte, aktiven Wasserstoff enthaltende Gruppen vom Typ (H-X-)ₙR-aufweisen. Als aktiven Wasserstoff enthaltende, funktionelle Gruppen HX- sind Amingruppen bevorzugt. n besitzt Werte von 1 bis 3, bevorzugt nimmt n den Wert 1 an. Beim Rest R handelt es sich um einen bifunktionellen bis tetrafunktionellen, bevorzugt bifunktionellen organischen Rest, der chemisch inerte Gruppen oder Substituenten tragen kann, mit einem Molekulargewicht von 13 bis 500. Bevorzugt handelt es sich beim Rest R um einen bifunktionellen (Ar)alkylenrest mit 1 bis 12 C-Atomen. Ein Alkylenrest mit 1 bis 12 C-Atomen ist als Rest R besonders bevorzugt.

Weiterhin enthält das Silanderivat der allgemeinen Formel (I) 1 bis 3, bevorzugt 2 oder 3 an Silizium gebundene Gruppen R'O-Gruppen, wobei R' bevorzugt die Bedeutung von C₁- bis C₈-Alkyl besitzt.

Als einige bevorzugte Beispiele für Verbindungen (I) seien beta-Aminoethyltriethoxysilan, gamma-Aminopropyltriethoxysilan, gamma-Aminopropyltrimethoxysilan, gamma-Aminopropylethyldiethoxysilan, gamma-Aminopropylphenyldiethoxysilan, gamma-Aminopropyltrimethoxysilan, delta-Aminobutyltriethoxysilan, delta-Aminobutylethyldiethoxysilan, N-(2-Aminoethyl-3-aminopropyl)trimethoxysilan, N-2-Aminoethyl-3-aminopropyl-tris(2-ethylhexoxy)silan, 6-(Amlnohexylaminopropyl)trimethoxysilan, N-Aminoethyl-3-aminopropylmethyl-dimethoxysilan genannt.

Die Umsetzung des NCO-funktionellen Polyurethan-Prepolymeren zum R'OSi-funktionalisierten Polyurethanharz erfolgt unter vollständigem Verbrauch der HX-Gruppen der Verbindungen I. Bevorzugt werden Isocyanatgruppen und HX-Gruppen stöchiometrisch im Verhältnis 1 : 1 miteinander zur Reaktion gebracht. Es ist aber auch möglich, die Reaktion mit einem Überschuß an Isocyanatgruppen durchzuführen. Die verbleibenden Isocyanatgruppen können für weitere Aufbaureaktionen, beispielsweise durch Reaktion mit Wasser, Hydrazin, Carbonsäurehydraziden, Polyolen oder Aminen, genutzt werden.

Das laterale und/oder terminale an Silizium gebundene R'O-Gruppen tragende Polyurethanharz kann Hydroxylgruppen besitzen. Ist dieses gewünscht, so wird das NCO-Gruppen enthaltende Polyurethan-Prepolymer bei der Herstellung des R'OSi-funktionalisierten Polyurethanhazres mit mindestens einer Verbindung der allgemeinen Formel I und mit mindestens einem NH₂- und/oder NH-Gruppen tragenden Alkanolamin mit einer OH-Funktionalität von mindestens 1 umgesetzt. Die Umsetzung erfolgt unter vollständigem Verbrauch der HX-Gruppen der Verbindungen I und der NH-Gruppen des Alkanolamins. Die Isocyanatgruppen des NCO-funktionellen PU-Prepolymeren werden mit den HX-Gruppen von I und den NH-Gruppen des Alkanolamins bevorzugt im stöchiometrischen Verhältnis zur Reaktion gebracht. Dabei können das Alkanolamin und die Verbindung I in Mischung oder nacheinander mit dem NCO-funktionellen Polyurethan-Prepolymer umgesetzt werden.

Bei den NH₂- und/oder NH-Gruppen tragenden Alkanolaminen mit einer OH-Funktionalität von mindestens 1 handelt es sich um Verbindungen, die als Lieferanten für Hydroxylgruppen in der Polyurethanharzdispersion dienen können. Die NH- oder NH₂-Gruppen der Alkanolamine weisen gegenüber den Isocyanatgruppen des NCO-funktionellen PU-Prepolymeren eine im Vergleich zu ihren OH-Gruppen deutlich höhere Reaktivität auf, d.h. bevorzugt reagieren die NH-Gruppen mit den Isocyanatgruppen unter Harnstoffbildung.

Beispiele für geeignete Alkanolamine mit einer OH-Funktionalität von mindestens 1 sind Monoalkanolamine und Dialkanolamine, z.B. Diethanolamin, N-Methylethanolamin, Diisopropanolamin, N-Ethylisopropanolamin, Monoisopropanolamin, Ethanolamin, 2,2-Aminoethoxyethanol, Monoethylethanolamin, Butylethanolamin, Cyclohexylethanolamin, 3-Aminopropanol, 2-Aminobutanol-1.

Anstelle der NH₂- und/oder NH-Gruppen tragenden Alkanolamine können auch andere gegenüber NCO-Gruppen reaktive monofunktionelle Verbindungen eingesetzt werden, beispielsweise Monoamine und/oder Monoalkohole mit C-6 bis C-30-Alkylresten. Dabei sind Fettamine und/oder Fettalkohole mit mehr als 12 C-Atomen bevorzugt. In diesem Fall werden an Silizium gebundene R'O-Gruppen tragende Polyurethanharze erhalten, die keine Hydroxylgruppen enthalten. Selbstverständlich können Monoamine und/oder Monoalkohole auch im Gemisch mit den NH₂- und/oder NH-Gruppen tragenden Alkanolaminen eingesetzt werden. Auf diese Weise läßt sich die OH-Zahl des resultierenden laterale und/oder terminale an Silizium gebundene R'O-Gruppen aufweisenden Polyurethanharzes im Bereich von 0 - 100 beliebig einstellen.

Ein wesentlicher Schritt bei der Herstellung der wäßrigen Polyurethandispersion auf Basis des laterale und/oder terminale an Silizium gebundene R'0- und/oder Hydroxylgruppen aufweisenden Polyurethanharzes besteht darin, daß dem R'OSi-funktionalisierten PU-Prepolymer, welches gegebenenfalls Hydroxylgruppen aufweist, innerhalb kurzer Zeit eine solche Menge an Wasser zugegeben wird, die ausreichend ist, eine weitere Reaktion der durch Hydrolyse gebildeten HOSi-Gruppen zu verhindern. Die Wasserzugabe erfolgt in mehr als zehnfachem stöchiometrischen Überschuß der zur Hydrolyse der R'Osi-Gruppen notwendigen Wassermenge. Bevorzugt wird ein mindestens 50-facher stöchiometrischer Überschuß zugesetzt. Besonders bevorzugt erfolgt der Wasserzusatz in einer solchen Menge, daß mindestens die Hälfte der zur Herstellung der wäßrigen Polyurethandispersion benötigten Wassermenge auf einmal zugesetzt wird. Durch Zusatz der ausreichenden Wassermenge wird eine unter Wasserabspaltung verlaufende Kondensation der durch Hydrolyse gebildeten HOSi-Gruppen zu Siloxanbrücken weitestgehend vermieden, d.h. man erhält eine wäßrige Dispersion eines Polyurethanharzes, das praktisch frei ist von Siloxanbrücken und das R'OSi- und/oder HOSi-Gruppen in einer zur Vernetzung ausreichenden Menge enthält.

Das Polyurethanharz weist ionische Gruppen, zur Ionenbildung befähigte Gruppen und/oder hydrophile Gruppen auf. Enthält das Polyurethanharz zur Ionenbildung befähigte Gruppen, so werden diese mit einer geeigneten Verbindung, z.B. einem Neutralisationsmittel, ganz oder teilweise in die entsprechenden Salze überführt. Dies kann in allen Stadien der vorstehend beschriebenen Synthese geschehen, wobei zu beachten ist, daß die Auswahl der zur Salzbildung eingesetzten Verbindungen so getroffen wird, daß diese sich während der Synthese chemisch inert verhalten. Bevorzugt werden die zur Salzbildung eingesetzten Verbindungen wie z.B. Neutralisationsmittel gemeinsam mit dem Wasser zugesetzt.

Als ionenbildende Gruppen sind solche bevorzugt, die zur Anionenbildung befähigt sind. Beispiele für solche Gruppen sind vorstehend bei der Synthese des NCO-Gruppen enthaltenden PU-Prepolymeren beschrieben. Zur Umwandlung in Anionen dient dann eine Base, z.B. ein Amin, bevorzugt ein tert.-Amin. Geeignete tertiäre Amine sind z.B. Trialkylamine, wie Trimethylamin, Triethylamin, Triisopropylamin, Tri-n-propylamin und Tri-n-butylamin; N-Alkylmorpholine, wie N-Methylmorpholin und N-Ethylmorpholin; N-Dialkylalkanolamine, wie N-Dimethylethanolamin, N-Diethylethanolamin und N-Dimethylisopropanolamin und Mischungen aus mindestens zwei dieser Verbindungen.

Enthält das Polyurethanharz kationenbildende Gruppen, so werden bevorzugt eine oder mehrere Säuren zur Ionenbildung verwendet. Geeignete Säuren sind z.B. Phosphorsäure oder saure Phosphorsäureester, oder organische Carbonsäuren wie Ameisensäure, Essigsäure, Propionsäure, Acrylsäure, Hydroxycarbonsäuren wie Milchsäure, Dimethylolpropionsäure oder Zitronensäure, oder Dicarbonsäuren wie Malonsäure, Glutarsäure oder Oxalsäure. Es können auch Mischungen der Säuren eingesetzt werden. Es ist aber auch eine Quartärnisierungsreaktion mit Alkylierungsmitteln, wie z.B. die Umsetzung mit Alkylhalogeniden oder Epoxiden, möglich.

Die Umsetzung der zum Aufbau des NCO-funktionellen PU-Prepolymeren eingesetzten Komponenten als auch die weitere Umsetzung zum R'OSi-funktionalisierten Polyurethanharz erfolgen im wasserfreien Milieu beispielsweise bei Temperaturen von 20 bis 140°C, bevorzugt zwischen 40 und 100°C. Es kann lösemittelfrei gearbeitet werden oder es wird in dem Fachmann an sich geläufigen für die Polyurethansynthese geeigneten organischen Lösemitteln gearbeitet. Als Lösemittel können wassermischbare Lösemittel oder nicht-wassermischbare Lösemittel eingesetzt werden. Im allgemeinen ist es vorteilhaft, solche Lösemittel zu verwenden, die in jedem Stadium der Herstellung der PU-Dispersion (beispielsweise nach deren Fertigstellung) entfernt werden können, beispielsweise durch Abdestillieren gegebenenfalls unter vermindertem Druck.

Beispiele für geeignete Lösemittel sind Ketone, z.B. Aceton, Methylethylketon, Methylisobutylketon; N-Alkylpyrrolidone, wie z.B. N-Methylpyrrolidon; Ether, wie z.B. Diethylenglykoldimethylether, Dipropylenglykoldimethylether, oder auch cyclische Harnstoffderivate, wie 1,3-Di-methyl-3,4,5,6-tetrahydro-2(1H)-pyrimidinon.

Das lösemittelfrei oder in organischer Lösung vorliegende Polyurethanharz wird durch Zugabe ausreichender Wassermengen in die wäßrige Phase überführt. Es ergibt sich eine feinteilige Polyurethandispersion mit einer mittleren Teilchengröße von größer 10 und kleiner als 2000 nm, bevorzugt über 50 und unter 500 nm. Die Verteilung kann dabei monomodal oder bimodal, bevorzugt monomodal sein.

Im allgemeinen ist es nicht notwendig, zur Überführung der eingesetzten Polyurethanharze in wäßrige Dispersionen Emulgatoren mitzuverwenden. Dies schließt jedoch nicht aus, daß Emulgatoren ionischer und nichtionischer Art zugesetzt werden können, um ein Emulgieren zu erleichtern, und gegebenenfalls die Zahl der ionisierbaren Gruppen zu senken.

Bei der Herstellung der Polyurethandispersion werden die Edukte in solchen Mengen miteinander zur Reaktion gebracht, daß vom Fachmann gewünschte Bindemittelqualitäten erzielt werden, wie z.B. Wasserdispergierbarkeit, Viskositätsverhalten, Filmbildungseigenschaften, Lagerstabilität. Durch die Wahl der Art und der Menge der Komponenten können auch Eigenschaften wie z.B. Härte und Bewitterungsfähigkeit von aus den Dispersionen erhaltenen Überzügen beeinflußt werden. Die Wahl der Art und der Menge der Komponenten läßt sich vom Fachmann anhand der hier aufgezeigten Lehre leicht, gegebenenfalls anhand von Routineversuchen ermitteln. Insgesamt werden die Mengenanteile der einzelnen Edukte bevorzugt so gewählt und die Reaktion so geführt, daß das der Polyurethandispersion zugrundeliegende Polyurethanharz ein Zahlenmittel der Molmasse (Mn) von 2500 bis 120000, einen Gehalt von 10 bis 400, bevorzugt von 20 bis 300 mmol, besonders bevorzugt 40 bis 200 mmol laterale und/oder terminale an Silizium gebundene Hydroxyl- und/oder R'O-Gruppen, worin
R' = C₁ bis C₈-Alkyl oder C(O)R''', und
R''' = C₁ bis C₁₀-Alkyl
bedeuten, pro 100 g Festharz, eine Hydroxylzahl von 0 bis 150, bevorzugt über 1 und unter 100 mg KOH/g, bezogen auf Festharz, wobei an Silizium gebundene Hydroxylgruppen bei der Berechnung der OH-Zahl nicht mitgezählt werden, und einen Gehalt an ionischen, in ionische Gruppen überführbaren und/oder hydrophilen Gruppen von 5 bis 200 mEqu pro 100 g Festharz aufweist.

Die Herstellung der wäßrigen PU-Dispersion auf Basis des laterale und/oder terminale an Silizium gebundene Hydroxyl- und/oder R'O-Gruppen tragenden Polyurethanharzes kann nach bekannten Verfahren erfolgen. Beispielsweise ist es möglich die neutralisierten Harze vorzulegen und unter gutem Dispergieren mit Wasser zu versetzen. Ebenso kann die gegebenenfalls Neutralisationsmittel enthaltende Wasserphase vorgelegt und unter Rühren das Harz eingearbeitet werden. Ebenso ist eine kontinuierliche Arbeitsweise möglich, d.h. es werden in bekannten Aggregaten, z.B. einem Rotor-Statormischer, gleichzeitig Harz, Wasser und Neutralisationsmittel homogen zusammengemischt.

Der pH-Wert der resultierenden Polyurethandispersion kann beispielsweise auf einen Wert zwischen 5 und 10 eingestellt werden. Es entsteht aus den Komponenten eine feinteilige opake bis milchig trübe wäßrige Dispersion.

Die bevorzugt verwendeten anionischen PU-Dispersionen weisen eine Säurezahl von 5 bis 90 (bezogen auf den Festkörper) bevorzugt über 10 und unter 50 auf. Der Festkörper beträgt zwischen 25 und 65 Gew.-%, bevorzugt über 35 und unter 60 Gew.-%. Das Zahlenmittel der Molmasse (Mn) der in den PU-Dispersionen enthaltenen Polyurethanharze beträgt beispielsweise 2500 bis 120000, wobei die Untergrenze bevorzugt bei 4000, besonders bevorzugt bei 10000 und die Obergrenze bei bis zu 50000 liegt.

Gegebenenfalls in den Polyurethandispersionen enthaltene Lösemittel können falls gewünscht durch Abdestillieren entfernt werden. Dies kann unter vermindertem Druck geschehen.

Die aus den PU-Dispersionen hergestellten Wasserbasislacke sind selbstvernetzend. Die den PU-Dispersionen zugrundeliegenden PU-Harze besitzen Hydroxylzahlen zwischen 0 und 100, bevorzugt zwischen 0 und 60 mg KOH/g, wobei an Silizium gebundene Hydroxylgruppen bei der Berechnung der OH-Zahl nicht mitgezählt werden. Sollen die im erfindungsgemäßen Verfahren eingesetzten selbstvernetzenden Wasserbasislacke einer zusätzlichen Fremdvernetzung zugänglich sein, so liegt die Hydroxylzahl der Polyurethanharze bevorzugt im oberen Wertebereich.

Zur Herstellung der selbstvernetzenden Wasserbasislacke werden der PU-Dispersion beispielsweise Pigmente, weitere Bindemittel, Additive sowie gegebenenfalls geringe Mengen an Lösemitteln zugesetzt.

Die Wasserbasislacke können neben der selbstvernetzenden Polyurethanharz-Dispersion ein oder mehrere weitere unterschiedliche Bindemittel enthalten. Dies kann beispielsweise zur Erzielung synergistischer Effekte günstig sein. Beispiele für weitere Bindemittel sind dem Fachmann geläufige übliche filmbildende wasserlösliche oder wasserverdünnbare Harze, wie wasserverdünnbare Polyesterharze, wasserverdünnbare Polyacrylatharze und/oder andersartige wasserverdünnbare Polyurethanharze. Es kann sich um reaktive oder nicht-funktionelle Harze handeln. Die Menge der zugesetzten Harze kann 0 bis 75 Gew.-%, vorzugsweise 0 bis 50 Gew.-% des gesamten Harzfestkörpers betragen. Besonders bevorzugt sind 0 bis 30 Gew.-%. In diesem Zusammenhang bedeutet Harzfestkörper die Summe aller Bindemittel ohne den gegebenenfalls vorhandenen Vernetzeranteil für die gegebenenfalls zusätzlich gewünschte Fremdvernetzung.

Die Spezifikation und der Mengenanteil von zusätzlichen Bindemitteln werden so gewählt, daß sich bevorzugt ein Gemisch ergibt, das im Mittel einen Gehalt an ionischen, in ionische Gruppen überführbaren und/oder hydrophilen Gruppen von 5 bis 200 mEqu pro 100 g Festharz aufweist. Bevorzugt sind anionische Gruppen.

Verwendbare wasserverdünnbare Polyester sind beispielsweise solche mit freien Carboxylgruppen, d.h. Polyester mit hoher Säurezahl. Es sind grundsätzlich zwei Methoden bekannt, die benötigten Carboxylgruppen in das Harzsystem einzufügen. Der erste Weg besteht darin, die Veresterung bei der gewünschten Säurezahl abzubrechen. Bei dieser Verfahrensweise wird der Einbau von sterisch gehinderten Carboxylgruppen, beispielsweise durch Kondensation mit Dimethylolpropionsäure, bevorzugt. Nach Neutralisation mit Basen sind die so erhaltenen Polyester in Wasser löslich. Die zweite Möglichkeit besteht in der Bildung partieller Ester von Di- oder Polycarbonsäuren mit hydroxylreichen Polyestern mit niedriger Säurezahl. Für diese Reaktion werden üblicherweise Anhydride der Dicarbonsäuren herangezogen, welche unter milden Bedingungen unter Ausbildung einer freien Carboxylgruppe mit der Hydroxylkomponente umgesetzt werden.

Die verwendbaren wasserverdünnbaren Polyacrylatharze können ebenso wie die oben beschriebenen Polyesterharze freie Carboxylgruppen enthalten. Es handelt sich beispielsweise um Acryl- bzw. Methacrylcopolymerisate, und die Carboxylgruppen stammen aus den Anteilen an Acryl- oder Methacrylsäure.

Unter zusätzlichen Polyurethandispersionen sind beispielsweise solche zu verstehen, die in der DE-A-36 28 125 beschrieben werden. Es sind anionisch stabilisierte PU-Dispersionen, die durch Umsetzung von Polyolen, Diisocyanaten, ionischen Verbindungen sowie Kettenverlängerung mit Aminen entstehen können. Weiterhin können auch durch nicht-ionische hydrophile Gruppen stabilisierte PU-Dispersionen den im erfindungsgemäßen Verfahren verwendeten selbstvernetzenden Wasserbasislacken zugesetzt werden.

Die wasserverdünnbaren Polyester oder Polyurethanharze können auch durch geeignete Polymerisationsverfahren in Dispersionen acryliert oder gepfropft werden. Beispiele für verwendbare acrylierte Polyurethandispersionen sind in der DE-A-41 22 265 beschrieben.

Eine weitere Gruppe von wäßrigen Dispersionen, die den im erfindungsgemäßen Verfahren eingesetzten Wasserbasislacken zugesetzt werden können, sind die in der DE-A-36 28 124 beschriebenen Dispersionen auf Basis von ionischen epoxidgruppenhaltigen Polykondensaten, die mit copolymerisierbaren ungesättigten Monomeren umgesetzt werden.

Bei Zusatz von weiteren Bindemitteln ist es selbstverständlich, daß zusätzliche ionisch stabilisierte Harze und Dispersionen nur zusammen mit gleichartig geladenen ionischen Dispersionen verwendet werden können, um die Stabilität nicht negativ zu beeinflussen.

Zur Bereitung der im erfindungsgemäßen Verfahren einsetzbaren an sich selbstvernetzenden Wasserbasislacke können, falls eine zusätzliche Fremdvernetzung gewünscht ist, verschiedene Vernetzer, wie beispielsweise Formaldehyd-Kondensationsharze, wie Phenol-Formaldehyd-Kondensationsharze und Amin-Formaldehydkondensationsharze, sowie blockierte Polyisocyanate verwendet werden. Die Vernetzer können einzeln und im Gemisch eingesetzt werden. Das Mischungsverhältnis Vernetzer zu Polyurethanharz beträgt bevorzugt 10 : 90 bis 40 : 60, besonders bevorzugt 20 : 80 bis 30 : 70, jeweils bezogen auf das Festkörpergewicht. Wenn neben der erfindungsgemäßen Polyurethanharz-Dispersion weitere Bindemittel eingesetzt werden, beziehen sich die vorstehenden Mischungsverhältnisse vorzugsweise auf den gesamten Harzfestkörper.

Zu als Vernetzer geeigneten Aminharzen zählen beispielsweise alkylierte Kondensate, die durch Umsetzung von Aminotriazinen und Amidotriazinen mit Aldehyden hergestellt werden. Nach bekannten technischen Verfahren werden Amine oder Aminogruppen tragende Verbindungen wie Melamin, Guanamin, Acetoguanamin, Benzoguanamin, Dicyandiamid oder Harnstoff in Gegenwart von Alkoholen, wie Methanol, Ethanol, Propanol, Butanol oder Hexanol mit Aldehyden, insbesondere Formaldehyd, kondensiert. Die Reaktivität derartiger Aminharze wird bestimmt durch den Kondensationsgrad, das Verhältnis der Amin- bzw. Amidkomponenten zu Formaldehyd und durch die Art des verwendeten Veretherungsalkohols. Beispiele für derartige Harze und ihre Herstellung werden in "Houben-Weyl, Methoden der organischen Chemie" 1963, Seite 357, beschrieben. Diese Produkte sind im Handel geläufig.

Als Vernetzungsmittel können auch blockierte Polyisocyanate eingesetzt werden. Es können bei der Erfindung beliebige Polyisocyanate benutzt werden, bei denen die Isocyanatgruppen mit einer Verbindung umgesetzt worden sind, so daß das gebildete blockierte Polyisocyanat gegenüber Hydroxylgruppen und Wasser bei Raumtemperatur beständig ist, bei erhöhten Temperaturen, beispielsweise im Bereich von etwa 90 bis etwa 250°C, aber reagiert. Bei der Herstellung der blockierten Polyisocyanate können beliebige für die Vernetzung geeignete organische Polyisocyanate verwendet werden. Bevorzugt sind die Isocyanate, die etwa 3 bis etwa 36, insbesondere etwa 8 bis 15 Kohlenstoffatome enthalten. Beispiele für geeignete Diisocyanate sind die vorstehend als Komponente b) genannten Diisocyanate.

Bevorzugt werden Polyisocyanate von höherer Isocyanatfunktionalität, wie die vorstehend unter b) genannten verwendet. Beispiele dafür sind Tris-(4-isocyanatophenyl)-methan, 1,3,5-Triisocyanatobenzol, 2,4,6-Triisocyanatotoluol, 1,3,5-Tris-(6-Isocyanatohexan)-biuret, Bis-(2,5-diisocyanato-4-methyl-phenyl)-methan und polymere Polyisocyanate, wie Dimere und Trimere von Diisocyanatotoluol. Ferner kann man auch Mischungen von Polyisocyanaten benutzen.

Die bei den Wasserbasislacken als Vernetzungsmittel in Betracht kommenden organischen Polyisocyanate können auch Prepolymere sein, die sich beispielsweise von einem Polyol ableiten. Dazu werden in üblicher Weise Polyole mit einem Überschuß von Polyisocyanaten umgesetzt, wodurch Prepolymere mit endständigen Isocyanatgruppen entstehen. Die blockierten Polyisocyanate; die als Vernetzer eingesetzt werden können, können mit üblichen flüchtigen einwertigen Blockierungsmitteln blockiert sein, wie sie in der Lackchemie eingesetzt werden. Beispiele hierfür sind verschiedene Alkohole, Oxime, Phenole, NH-funktionelle Stickstoffheterocyclen, wie Pyrazolderivate oder Triazolderivate, Amine, beta-Ketoverbindungen und Phthalimid. Die Polyisocyanate können in einem Molekül mit gleichen oder verschiedenen Blockierungsmitteln blockiert sein. Als Vernetzer können auch Gemische unterschiedlich blockierter Polyisocyanate verwendet werden sowie auch Polyisocyanate, die intramolekular unterschiedlich blockiert sind.

Weiterhin können die selbstvernetzenden Wasserbasislacke dem Fachmann bekannte Polymermikroteilchen enthalten. Es können vernetzte oder unvernetzte Mikroteilchen eingesetzt werden. Beispiele für solche Polymermikroteilchen sind in der EP-A-0 038 127 und EF-A-0 234 362 beschrieben.

Weiterhin können die im erfindungsgemäßen Verfahren einsetzbaren selbstvernetzenden Wasserbasislacke lacktechnische Additive enthalten, beispielsweise rheologiebeeinflussende Mittel, wie hochdisperse Kieselsäure, anorganische Schichtsilikate oder polymere Harnstoffverbindungen. Als Verdicker wirken auch beispielsweise wasserlösliche Celluloseether wie Hydroxyethylcellulose, Methylcellulose oder Carboxymethylcellulose, sowie synthetische Polymere mit ionischen und/oder assoziativ wirkenden Gruppen wie Polyvinylalkohol, Poly(meth)acrylamid, Poly(meth)acrylsäure, Polyvinylpyrrolidon, Styrol-Maleinsäureanhydrid oder Ethylen-Malelnsäureanhydrid-Copolymere und ihre Derivate oder auch hydrophob modifizierte ethoxylierte Polyurethane oder Polyacrylate. Daneben können auch Antiabsetzmittel, Verlaufsmittel, Lichtschutzmittel, Antischaummittel, wie beispielsweise silikonhaltige Verbindungen; Netzmittel sowie haftvermittelnde Substanzen eingesetzt werden. Unter Netzmittel werden auch bekannte Pastenharze verstanden, die zum besseren Dispergieren und Vermahlen der Pigmente eingesetzt werden können. Zum Beschleunigen der Härtung können gegebenenfalls Katalysatoren eingesetzt werden, es ist jedoch auch möglich durch thermische Energie ohne Einsatz eines Katalysators zu härten.

Als in geringen Mengen vorhandene Lösemittel sind übliche lacktechnische Lösemittel geeignet, diese können von der Herstellung der Bindemittel stammen oder werden separat zugegeben. Beispiele für solche Lösemittel sind ein- oder mehrwertige Alkohole, z.B. Propanol, Butanol, Hexanol; Glykolether oder -ester, z.B. Diethylenglykoldialkylether, Dipropylenglykoldialkylether, jeweils mit C₁-₆-Alkyl, Ethoxypropanol, Butylglykol; Glykole z.B. Ethylenglykol; Propylenglykol, und dessen Oligomere, N-Methylpyrrolidon sowie Ketone wie Methylethylketon, Aceton, Cyclohexanon; aromatische oder aliphatische Kohlenwasserstoffe, z.B. Toluol, Xylol oder C₆ - C₁₂ lineare oder verzweigte aliphatische Kohlenwasserstoffe.

Die selbstvernetzenden Wasserbasislacke können ein oder mehrere anorganische und/oder organische farb- und/oder effektgebende Pigmente und gegebenenfalls zusätzlich mindestens einen Füllstoff enthalten.

Beispiele für effektgebende Pigmente sind Metallpigmente, z.B. aus Aluminium, Kupfer oder anderen Metallen; Interferenzpigmente wie z.B. metalloxidbeschichtete Metallpigmente, z.B. titandioxidbeschichtetes Aluminium, beschichtete Glimmer wie z.B. titandioxidbeschichteter Glimmer und Graphiteffektpigmente. Beispiele für farbgebende Pigmente und Füllstoffe sind Titandioxid, mikronisiertes Titandioxid, Eisenoxidpigmente, RuB, Siliciumdioxid, Bariumsulfat, mikronisierter Glimmer, Talkum, Kaolin, Kreide, Azopigmente, Phthalocyaninpigmente, Chinacridonpigmente, Pyrrolopyrrolpigmente, Perylenpigmente.

Die Effektpigmente werden im allgemeinen in Form einer handelsüblichen wäßrigen oder nicht-wäßrigen Paste vorgelegt, gegebenenfalls mit bevorzugt wasserverdünnbaren, organischen Lösemitteln und Additiven versetzt und danach mit dem wäßrigen Bindemittel unter Scheren vermischt. Pulverförmige Effektpigmente können zunächst mit bevorzugt wasserverdünnbaren organischen Lösemitteln und Additiven zu einer Paste verarbeitet werden. Es ist darauf zu achten, daß die plättchenförmigen Effektpigmente beim Vermischen nicht mechanisch beschädigt werden.

Farbpigmente und/oder Füllstoffe können beispielsweise in einem Teil des wäßrigen Bindemittels angerieben werden. Bevorzugt kann das Anreiben auch in einem speziellen wasserverdünnbaren Pastenharz geschehen. Ein Beispiel für ein im erfindungsgemäßen Wasserbasislack bevorzugt einsetzbares Pastenharz auf Polyurethanbasis findet sich in der DE-A-40 00 889. Das Anreiben kann in üblichen, dem Fachmann bekannten Aggregaten erfolgen. Danach wird mit dem restlichen Anteil des wäßrigen Bindemittels oder des wäBrigen Pastenharzes zur fertigen Farbpigmentanreibung komplettiert.

Sind im Überzugsmittel Pastenharze vorhanden, so addieren sich diese bei der Berechnung des Harzfestkörpers zu Bindemittel plus gegebenenfalls vorhandenem Vernetzer.

Ist der Wasserbasislack auf Basis der bevorzugten anionisch stabilisierten, selbstvernetzenden laterale und/oder terminale R'OSi- und/oder HOSi-Gruppen tragenden Polyurethanharzes formuliert, so enthält er Basen als Neutralisationsmittel. Beispiele sind Ammoniak oder organische Amine wie Triethylamin, N-Methyl-morpholin, Aminoalkohole wie Dimethylisopropanolamin, Dimethylethanolamin, 2-Amino-2-methylpropanol-1.

Die selbstvernetzenden Wasserbasislacke besitzen beispielsweise einen Festkörpergehalt von 10 - 50 Gew.-%, für Effektbasislacke liegt er beispielsweise bevorzugt bei 15 - 30 Gew.-%, für unifarbige Basislacke liegt er bevorzugt höher, beispielsweise bei 20 - 45 Gew.-%. Das Verhältnis von Pigment zu Bindemittel plus gegebenenfalls Vernetzer plus gegebenenfalls Pastenharz im Wasserbasislack beträgt beispielsweise zwischen 0,03 : 1 bis 3 : 1, für Effektbasislacke liegt es beispielsweise bevorzugt bei 0,06 : 1 bis 0,6 : 1, für unifarbige Basislacke liegt es bevorzugt höher, beispielsweise bei 0,06 : 1 bis 2,5 :1, jeweils bezogen auf das Festkörpergewicht.

Der Lösemittelanteil der Wasserbasislacke beträgt bevorzugt unter 20 Gew.-%, besonders bevorzugt unter 15 Gew.-%, insbesondere bevorzugt unter 10 Gew.-%.

Die selbstvernetzenden Wasserbasislacke können nach üblichen Methoden appliziert werden. Bevorzugt werden sie durch Spritzen in einer Trockenschichtdicke von 8 bis 50 µm appliziert, für Effektbasislacke liegt die Trockenschichtdicke beispielsweise bevorzugt bei 10 bis 25 µm, für unifarbige Basislacke liegt sie bevorzugt höher, beispielsweise bei 10 bis 40 µm. Die Applikation erfolgt bevorzugt im Naß-in-Naß-Verfahren, d.h. nach einer Ablüftphase, z.B. bei 20 - 80°C, werden die Wasserbasislackschichten mit einem üblichen Klarlack in einer Trockenschichtdicke von bevorzugt 30 - 60 µm überlackiert und gemeinsam mit diesem bei Temperaturen von beispielsweise 20 bis 140°C unter Kondensation der HOSi-Gruppen zu Siloxanbrücken vernetzt. Die Trocknungsbedingungen der Decklackschicht (Basislack und Klarlack) richten sich nach dem verwendeten Klarlacksystem. Sie können beispielsweise bei 20 bis 150°C liegen. Für Reparaturzwecke sind beispielsweise Temperaturen von 20 bis 80°C bevorzugt. Für Zwecke der Serienlackierung sind Temperaturen über 100°C, beispielsweise über 110°C bevorzugt.

Als Klarlack sind grundsätzlich alle bekannten Klarlacke oder transparent pigmentierten Überzugsmittel geeignet. Hierbei können sowohl lösungsmittelhaltige 1- oder 2-Komponenten-Lacke, wasserverdünnbare Klarlacke, Pulverklarlacke oder durch Strahlung härtbare Klarlacke eingesetzt werden.

Nach dem erfindungsgemäßen Verfahren erstellte Mehrschichtlackierungen werden auf metallische Substraten aufgebracht. Die metallischen Substrate besitzen eine elektrophoretisch aufgebrachte Grundierung und zusätzlich eine oder mehrere weitere Füllerschichten (Primer-Surfacer). Diese Schichten sind im allgemeinen ausgehärtet. Der Wasserbasislack kann jedoch auch auf unvernetzte Füllerschichten wie z.B. in EP-A-0 238 037 beschrieben, naß-in-naß appliziert werden. In diesem Falle wird der Basislack im allgemeinen vor Auftrag einer Klarlackdeckschicht gemeinsam mit der Füllerschicht eingebrannt.

Es ist auch möglich den Wasserbasislack direkt, ohne weitere Zwischenschichten auf eine eingebrannte oder nicht-eingebrannte Elektrotauchlackschicht zu applizieren, wie dies auch für andere bekannte Basislacke auf Lösemittelbasis oder Wasserbasis möglich ist.

Die bei Anwendung des erfindundungsgemäßen Verfahrens erhaltenen Mehrschichtlackierungen entsprechen den heute üblichen Anforderungen in der Kraftfahrzeuglackierung. Das erfindungsgemäße Verfahren ist somit geeignet für die Fahrzeugerstlackierung und -reparaturlackierung, es kann jedoch auch in anderen Bereichen, z.B. der Kunststofflackierung, insbesondere der Fahrzeugteilelackierung, eingesetzt werden.

Die nach dem erfindungsgemäßen Verfahren hergestellte Mehrschichtlackierung weist eine gute Oberfläche auf. Die Haftung zwischen den Schichten und der Basislackschicht ist gut und zeigt auch bei Belastung im Feuchtraumklima keine Enthaftungsstörungen. Die Erfindung eignet sich besonders zur Verwendung in der Automobillackierung (Serien- und Reparaturlackierung).

Die nach dem erfindungsgemäßen unter Verwendung der selbstvernetzenden Wasserbasislacke, die als Bindemittel die laterale und/oder terminale R'OSi- und/oder HOSi-Gruppen tragenden Polyurethanharze enthalten, hergestellten Mehrschichtlackierungen zeichnen sich durch eine hervorragende Beständigkeit gegenüber Schwitzwasserbelastung aus.

### Herstellungsbeispiel 1:

339 g eines Polyesters aus Adipinsäure, Hexandiol und Isophthalsäure (OH-Zahl 104) und 19 g Dimethylolpropionsäure werden in 160 g N-Methylpyrrolidon gelöst und auf 40°C erwärmt. Danach werden 125 g Isophorondiisocyanat so zugegeben, daß eine Reaktionstemperatur von 80°C nicht überschritten wird. Es wird so lange gehalten, bis ein NCO-Gehalt von 2 % (bezogen auf Festharz) bestimmt nach DIN 53 185 erreicht ist.

Danach werden nacheinander 14,6 g 3-Aminopropyltriethoxysilan und 16,2 g Diethanolamin zugegeben. Die Reaktionsmischung wird solange bei 80°C gehalten bis keine freien NCO-Gruppen mehr nachweisbar sind (Titration). Zur Neutralisation werden 12,6 g Triethylamin gut eingearbeitet.

Nach Zugabe der neutralisierten Harzlösung zu 596 g vollentsalztem Wasser unter starkem Rühren erhält man eine feinteilige wäßrige Polyurethandispersion.

### Herstellungsbeispiel 2:

339 g eines Polyesters aus Adipinsäure, Hexandiol und Isophthalsäure (OH-Zahl: 104) und 19 g Dimethylolpropionsäure werden in 160 g N-Methylpyrrolidon gelöst und auf 40°C erwärmt. Danach werden 125 g Isophorondiisocyanat so zugegeben, daß eine Reaktionstemperatur von 80°C nicht überschritten wird. Es wird so lange gehalten bis ein NCO-Gehalt von 2 % (bezogen auf Festharz) bestimmt nach DIN 53 185 erreicht ist. Danach werden nacheinander 43,8 g 3-Amino-propyltriethoxysilan und 2,3 g Diethanolamin zugegeben. Die Reaktionsmischung wird so lange bei 80°C gehalten bis keine freien NCO-Gruppen mehr nachweisbar sind (Titration). Zur Neutralisation werden 12,6 g Triethylamin gut eingearbeitet.

Nach der Zugabe von 596 g vollentsalztem Wasser innerhalb von 5 Minuten erhält man eine feinteilige wäßrige Polyurethandispersion.

### Herstellungsbeispiel 3:

339 g eines Polyesters aus Adipinsäure, Hexandiol und Isophthalsäure (OH-Zahl: 104) und 19 g Dimethylolpropionsäure werden in 160 g N-Methylpyrrolidon gelöst und auf 40°C erwärmt. Danach werden 125 g Isophorondiisocyanat so zugegeben, daß eine Reaktionstemperatur von 80°C nicht überschritten wird. Es wird so lange gehalten bis ein NCO-Gehalt von 2 % (bezogen auf Festharz) bestimmt nach DIN 53 185 erreicht ist. Danach werden 42 g 3-Aminopropylmethyldiethoxysilan zugegeben.

Die Reaktionsmischung wird so lange bei 80°C gehalten bis keine freien NCO-Gruppen mehr nachweisbar sind (Titration). Zur Neutralisation werden 12,6 g Triethylamin gut eingearbeitet. Nach der Zugabe von 596 g vollentsalztem Wasser innerhalb von 5 Minuten erhält man eine feinteilige wäßrige Polyurethandispersion.

### Herstellungsbeispiel 4:

339 g eines Polyesters aus Adipinsäure, Hexandiol und Isophthalsäure (OH-Zahl: 104) und 19 g Dimethylolpropionsäure werden in 160 g N-Methylpyrrolidon gelöst und auf 40°C erwärmt. Danach werden 118,3 g Trimethyl-hexamethylendiisocyanat so zugegeben, daß eine Reaktionstemperatur von 80°C nicht überschritten wird. Es wird so lange gehalten bis ein NCO-Gehalt von 2 % (bezogen auf Festharz) bestimmt nach DIN 53 185, erreicht ist.

Danach werden nacheinander 33,6 g 3-Aminopropylmethyldiethoxysilan und 4,6 g Diethanolamin zugegeben. Die Reaktionsmischung wird so lange bei 80°C gehalten bis keine freien NCO-Gruppen mehr nachweisbar sind (Titration). Nach Zugabe der Harzlösung zu einer Mischung von 10,9 g N,N-Dimethylisopropanolamin und 596 g vollentsalztem Wasser unter starkem Rühren erhält man eine feinteilige wäßrige Polyurethandispersion.

### Herstellungsbeispiel 5:

339 g eines Polyesters aus Adipinsäure, Hexandiol und Isophthalsäure (OH-Zahl: 104) und 19 g Dimethylolpropionsäure werden in 160 g N-Methylpyrrolidon gelöst und auf 40°C erwärmt. Danach werden 125 g Isophorondiisocyanat so zugegeben, daß eine Reaktionstemperatur von 80°C nicht überschritten wird. Es wird so lange gehalten bis ein NCO-Gehalt von 2 % (bezogen auf Festharz) bestimmt nach DIN 53 185 erreicht ist. Danach werden 35,4 g 3-Aminopropyldimethylethoxysilan zugegeben.

Die Reaktionsmischung wird solange bei 80°C gehalten bis keine freien NCO-Gruppen mehr nachweisbar sind (Titration). Zur Neutralisation werden 14,5 g Triethylamin gut eingearbeitet. Nach der Zugabe von 596 g vollentsalztem Wasser innerhalb von 5 Minuten erhält man eine feinteilige wäßrige Polyurethandispersion.

### Herstellungsbeispiel 6:

346 g eines Polycaprolactondiols (OH-Zahl: 102) und 19 g Dimethylolpropionsäure werden in 160 g N-Nethylpyrrolidon gelöst und auf 40°C erwärmt. Danach werden 138 g 1,3-Bis(1-isocyanato-1-methylethyl)-benzol (TMXDI) so zugegeben, daß eine Reaktionstemperatur von 100°C nicht überschritten wird. Es wird so lange gehalten bis ein NCO-Gehalt von 2 % (bezogen auf Festharz) bestimmt nach DIN 53 185 erreicht ist. Danach werden nacheinander 43,8 g 3-Aminopropyltriethoxysilan und 2,3 g Diethanolamin zugegeben.

Die Reaktionsmischung wird so lange bei 80°C gehalten bis keine freien NCO-Gruppen mehr nachweisbar sind (Titration). Zur Neutralisation werden 12,6 g Triethylamin gut eingearbeitet.

Nach Zugabe von 622 g vollentsalztem Wasser innerhalb von 5 Minuten erhält man eine feinteilige wäßrige Polyurethandispersion.

### Herstellungsbeispiel 7:

### a) Herstellung eines carboxyfunktionellen, epoxidgruppenhaltigen Polymeren:

In eine Lösung von 141 g eines Polyesters (OHZ = 88), hergestellt auf der Basis von Phthalsäureanhydrid, Isophthalsäure, Maleinsäureanhydrid, Propanol und Glycerin, wie in der DE-OS 28 11 913 beschrieben, in 70 g Methylethylketon, wurden 100 g eines Anhydridgemisches (SZ/H₂O = 486), hergestellt durch Umsetzung von Trimellithsäureanhydrid mit Propandiol-1,2, bestehend somit aus Trimellithsäureanhydrid und Anhydriden der nachstehenden Formeln 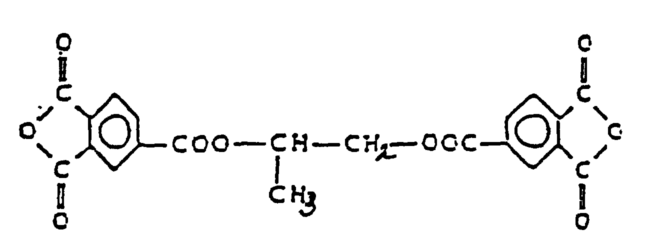 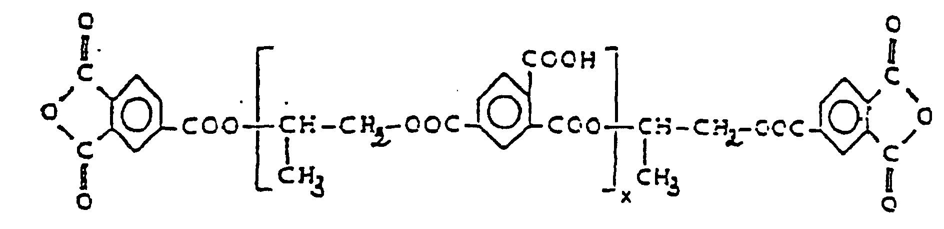 x = 1 bis 8 die in 108 g Xylol bei 50°C homogenisiert worden waren, innerhalb 1 Stunde zugetropft. Bei 90°C wurde so lange gerührt, bis das Reaktionsgemisch eine Säurezahl in Wasser von 165 (100 %iges Harz) erreicht hatte. Danach wurden 12 g Wasser zugemischt und nach 6-stündigem Rühren bei 80 bis 90°C eine Säurezahl in Butanol von 168 (100 %iges Harz) erreicht. Die Gemischtemperatur wurde auf 60°C gesenkt und nach Zugabe von 0,3 g Lithiumbenzoat 132 g eines epoxydierten Leinöls (Epoxidzahl = 8,7) innerhalb von 2 Stunden zugetropft und die Mischung so lange gerührt, bis die Säurezahl in Butanol auf 86,5 abgesunken war. Anschließend wurde eine Mischung von 42 g Dimethyl-amin (60 %ig in Wasser) in 860 g Wasser eingerührt. Es wurde eine hellgelbe, opaleszierende Lösung erhalten, aus der bei 0,1 bar und 40°C das organische Lösungsmittel abdestilliert wurde. Nach Filtration wurde eine gelbliche, praktisch klare wäßrige Harzlösung erhalten. Festkörpergehalt: 32 % (1 Stunde bei 125°C).

### b) Herstellung der Polymerisatdispersion

In einen Reaktor, ausgerüstet mit Rührer, Rückflußkühler, Innenthermometer und Dosiervorrichtung für die Monomeren, sowie den Initiator, wurden 705 g der vorstehenden wäßrigen (32 %igen) Dispersion und 196 g Wasser gefüllt. Diese Mischung wurde unter Rühren auf 80°C erwärmt und eine Lösung von 0,5 g Ammoniumperoxydisulfat in 35 g Wasser zugesetzt. 5 Minuten nach der Zugabe des Initiators wurden 35 g einer Monomerenmischung aus 125 g Methylmethacrylat, 94 g n-Butylacrylat und 17 g Glycidylmethacrylat zugesetzt und nach weiteren 15 Minuten Vorpolymerisation wurde die verbliebene Monomermenge über 2 Stunden zudosiert. 10 Minuten nach Beendigung der Zugabe wurden weitere 0,2 g Ammoniumperoxydisulfat, gelöst in 10 g Wasser, innerhalb von 10 Minuten zugesetzt und der Ansatz noch 2 Stunden bei 80°C gerührt, um vollständigen Umsatz zu erzielen. Es resultierte eine stabile wäßrige Dispersion mit ca. 40 % Feststoffgehalt.

### Herstellungsbeispiel 8:

### a) Herstellung eines carboxyfunktionellen, epoxidgruppenhaltigen Polymeren:

In eine Lösung von 127 g eines Polyesters (OHZ = 107) in 70 g Methylethylketon wurden 100 g Anhydrid-Gemisch (SZ/H₂O = 560), hergestellt durch Umsetzung von Trimellithsäureanhydrid mit Propandiol-1,2, die in 30 g Aceton bei 50°C homogenisiert waren, innerhalb einer Stunde zugetropft. Bei 90°C wurde so lange gerührt, bis das Reaktionsgemisch eine Säurezahl in Wasser von 197 (bezogen auf 100 %iges Harz) erreicht hatte. Danach wurden noch 15 g Wasser zugemischt. Nach 6-stündigem Rühren bei 80 bis 90°C betrug die Säurezahl in Butanol 180 (100 %iges Harz). Die Gemischtemperatur wurde auf 60°C gesenkt und 133 g eines epoxidierten Leinöls (Epoxyzahl = 8,9) innerhalb von 2 Stunden zugetropft.

Die Mischung wurde so lange gerührt, bis die Säurezahl in Butanol auf 90 abgesunken war. Danach wurde eine Mischung von 56 g Dimethylaminoethanol in 540 g Wasser eingerührt. Es wurde eine hellgelbe, opaleszierende Lösung erhalten, aus der bei 0,1 bar und 40°C das organische Lösungsmittel abdestilliert wurde. Nach Filtration wurde eine gelbliche, praktisch klare wäßrige Harzlösung erhalten. Festkörpergehalt (1 h bei 125°C) ca. 39 %.

### b) Herstellung der Polymerisatdispersion

355 g der (39 %igen) wäßrigen Dispersion aus 8a) wurden in einem Reaktor, der mit Rührer, Rückflußkühler, Innenthermometer und Dosiervorrichtungen für die Monomeren sowie den Initiator ausgerüstet war, mit 452 g Wasser gemischt, die Mischung unter Rühren auf 80°C erwärmt und eine Lösung von 0,5 g Ammoniumperoxydisulfat in 35 g Wasser zugesetzt. 5 Minuten nach der Zugabe des Initiators wurden 35 g einer Monomerenmischung aus 165 g Methylmethacrylat, 142 g n-Butylacrylat und 24 g Hydroxyethylacrylat zugesetzt und nach weiteren 15 Minuten Vorpolymerisation die verbliebene Monomermenge über 2 Stunden zudosiert. 10 Minuten nach Beendigung der Zugabe wurden weitere 0,2 g Ammoniumperoxydisulfat, gelöst in 10 g Wasser, innerhalb von 10 Minuten zugesetzt und der Ansatz noch 2 Stunden bei 80°C gerührt, um vollständigen Umsatz zu erzielen. Es resultierte eine stabile wäßrige Dispersion mit ca. 40 % Feststoffgehalt.

### Herstellungsbeispiel 9:

### Herstellung eines Pastenharzes

In einem Reaktionsgefäß mit Innenthermometer und Rückflußkühler werden 1395 g eines linearen gesättigten Polyesters (aufgebaut aus Adipinsäure und Hydroxypivalinsäureneopentylglykolester) mit einer OH-Zahl von 112 und einer Viskosität (bei 25°C) von 8,7 Pas unter gutem Rühren mit 161 g Dimethylolpropionsäure und 163 g Trimethylolpropan zum Lösen auf 90°C erwärmt und dann auf 50°C abgekühlt. Nach Zusatz von 865 g Tetramethylxylylendiisocyanat wird langsam auf 120°C erwärmt, bis der NCO-Gehalt unter 0,2 % liegt. Danach wird mit 861 g Methoxypropanol verdünnt.

| | |
|---|---|
| Festkörper (30 min 150°C) | 75 Gew.-% |
| Säurezahl (bezogen auf Festkörper) | 27 |
| Viskosität bei 25°C, mit Methoxypropanol auf 40 % verdünnt | 210 mPa.s* |

Auf 1963 g dieser Harzlösung werden ein Gemisch aus 58,3 g Dimethylethanolamin und 58,3 g Wasser schnell zugegeben und auf 80°C erwärmt. Danach wird langsam mit Wasser verdünnt zu einer trüben, in der Wärme gut verarbeitbaren hochviskosen Paste mit folgenden Kennzahlen:

| | |
|---|---|
| Festkörper (30 min. 150°C) | 32,3 Gew.-% |
| Viskosität bei 25°C | 1,3 Pas* |
| MEQ-Wert | 42 |
| pH-Wert | 7,6 |

| | |
|---|---|
| * gemessen in einem Rotationsviskosimeter mit koaxialer Zylindereinrichtung nach DIN 53 018 und 53 019 nach 5 min. Scheren bei einem Schergefälle von 231 Sek.⁻¹. | |

### Herstellung der Komponenten für die folgenden Lackbeispiele

### Herstellungsbeispiel 10:

Herstellung einer Bindemittellösung
50,00 g des vorstehend unter Herstellungsbeispiel 7 beschriebenen wasserverdünnbaren Bindemittels werden mit

| | |
|---|---|
| 43,94 g | vollentsalztem Wasser und |
| 6,00 g | Butoxyethanol vermischt und mit |
| 0,06 g | N-Dimethylaminoethanol auf einen pH-Wert von 6,2 - 6,4 eingestellt. |

### Herstellungsbeispiel 11:

Herstellung einer Aluminiumanteigung
20,50 g einer handelsüblichen Aluminiumpaste mit einem Hetallgehalt von 65 % werden mit einer Mischung aus

| | |
|---|---|
| 7,00 g | Butoxyethanol und |
| 15,50 g | vollentsalztem Wasser gut verrührt und anschließend mit einer Mischung aus |
| 4,00 g | des vorstehend unter Herstellungsbeispiel 7 und zusätzlich |
| 4,50 g | des unter Herstellungsbeispiel 2 beschriebenen Bindemittels, |
| 10,00 g | Butoxyethanol, |
| 34,70 g | vollentsalztem Wasser und |
| 3,00 g | eines handelsüblichen sauren Acrylatverdickers versetzt. Mit einer Mischung aus |
| 0,08 g | N-Dimethylaminoethanol und |
| 0,72 g | vollentsalztem Wasser wird auf einen pH-Wert von 6,2 - 6,4 eingestellt. |

### Herstellungsbeispiel 12:

Herstellung einer blauen Pigmentanreibung
Mit Hilfe eines Dissolvers werden

| | |
|---|---|
| 10,00 g | Cu-Phthalocyaninpigment in |
| 17,00 g | eines handelsüblichen Hexamethoxymelaminharzes und |
| 10,00 g | Butoxyethanol vordispergiert und nach Zusatz von weiteren |
| 5,00 g | des Melaminharzes und |
| 10,00 g | Butoxyethanol mit einer Perlmühle ausdispergiert. Danach wird mit einer Mischung aus |
| 0,90 g | eines handelsüblichen sauren Acrylatverdickers und |
| 18,91 g | vollentsalztem Wasser versetzt und mit |
| 2,00 g | N-Dimethylaminoethanol und |
| 26,19 g | vollentsalztem Wasser auf pH 7,1 - 7,3 eingestellt. |

### Herstellungsbeispiel 13:

Herstellung einer grünen Pigmentanreibung

| | |
|---|---|
| 20,00 g | eines chlorierten Phthalocyaninpigmentes werden mit einem Dissolver in einer Mischung aus |
| 20,00 g | des vorstehend unter Herstellungsbeispiel 9 beschriebenen Bindemittels, |
| 35,00 g | Butoxyethanol und |
| 0,50 g | N-Dimethylaminoethanol vordispergiert und anschließend auf einer Perlmühle ausdispergiert. Danach wird die Mischung mit |
| 24,50 g | vollentsalztem Wasser verdünnt. |

### Herstellungsbeispiel 14:

Es wurde gearbeitet, wie im Herstellungsbeispiel 10 beschrieben, jedoch unter Verwendung des unter Herstellungsbeispiel 8 beschriebenen Bindemittels (50,00 g).

### Herstellungsbeispiel 15:

Es wurde gearbeitet, wie im Herstellungsbeispiel 11 beschrieben, jedoch unter Verwendung des unter Herstellungsbeispiel 8 beschriebenen Bindemittels (4,00 g), zusammen mit dem unter Herstellungsbeisplel 2 beschriebenen Bindemittel (4,50 g).

### Beispiele für Lackformulierungen

### Beispiel 1

### 1.1 Herstellung eines wasserverdünnbaren, blauen Metallicbasislackes

| | |
|---|---|
| 30,00 g | der in Herstellungsbeispiel 10 beschriebenen Bindemittellösung werden mit |
| 19,00 g | der in Herstellungsbeispiel 11 beschriebenen Aluminiumanteigung, |
| 1,90 g | saurem Acrylat-Verdicker (wie vorstehend verwendet), |
| 17,44 g | vollentsalztem Wasser und |
| 0,25 g | N-Dimethylaminoethanol für eine Dauer von 30 Minuten gerührt. |

In diese Mischung werden

| | |
|---|---|
| 25,50 g | der unter Herstellungsbeispiel 6 beschriebenen Polyurethandispersion eingerührt und die in Herstellungsbeispiel 12 beschriebene Pigmentanreibung wird in einer Menge von |
| 0,94 g | zugesetzt. Anschließend werden unter Rühren |
| 4,00 g | n-Butanol zugegeben und mit |
| 0,96 g | Wasser auf eine Viskosität von 90 - 95 mPa.s bei einem Schergefälle von 100 sec⁻¹ eingestellt. |

Festkörpergehalt: 18,0 Gew.-% (120 Minuten in einem Umlufttrockenofen bei 120°C).

### 1.2 Aufbringen des Basislackes und eines Klarlackes

Auf ein in üblicher Weise mit Zn-phosphatierung, Elektrotauchlack und Spritzgrund vorbeschichtetes Blech wird der in 1.1 beschriebene Basislack mit einer Druckluft-zerstäubenden Spritzpistole so aufgetragen, daß in zwei Auftragsschichten eine Gesamttrockenfilmstärke von 15 µm erreicht wird. Die Bedingungen bei der Applikation des Basislackes sind 23°C Umgebungstemperatur und 60 % relative Luftfeuchtigkeit. Nach der Applikation wird das beschichtete Biech in einem Umlufttrockenofen 5 Minuten bei 50°C forciert getrocknet und nach dem Abkühlen auf 23°C in üblicher Weise mit einem handelsüblichen Acryl-Melaminharz-Klarlack überschichtet und 30 Minuten bei 130°C eingebrannt.

Man erhält so eine gleichmäßige wolkenfreie Beschichtung mit einem ausgezeichneten Metalliceffekt, sehr hohem Glanz und hervorragender Beständigkeit gegen Schwitzwasser.

### Beispiel 2

### 2.1 Herstellung eines wasserverdünnbaren silberfarbenen Metallicbasislackes

Analog zu Beispiel 1.1 wird ein silberfarbener Basislack hergestellt aus

| | |
|---|---|
| 40,00 g | der in Herstellungsbeispiel 14 beschriebenen Bindemittellösung, |
| 19,00 g | der in Herstellungsbeispiel 15 beschriebenen Aluminiumanteigung, |
| 1,90 g | saurem Acrylatverdicker, |
| 0,26 g | N-Dimethylaminoethanol, |
| 22,00 g | Polyurethandispersion (gemäß Herstellungsbeispiel 2), |
| 4,00 g | n-Butanol und |
| 12,84 g | vollentsalztem Wasser. |

Der Festkörpergehalt beträgt 18,0 Gew.-% (120 Minuten im Umlufttrockenofen bei 120°C). Die Viskosität liegt bei 90 - 95 mPa.s bei einem Schergefälle von 100 sec⁻¹.

### 2.2 Aufbringen des Basislackes und eines Klarlackes

Wie in Beispiel 1.2 beschrieben, wird ein vorbeschichtetes Blech mit Basislack beschichtet und 5 Minuten bei 50°C forciert getrocknet. Nach dem Abkühlen wird mit einem handelsüblichen Zweikomponenten-Acryl-Isocyanat-Klarlack überschichtet und 30 Minuten bei 130°C eingebrannt.

Die so erhaltene Beschichtung zeichnet sich durch eine hohe Brillanz, absolut gleichmäßige wolkenfreie Effektausbildung, ausgeprägten Metalliceffekt und hervorragende Beständigkeit gegen Schwitzwasser.

### Beispiel 3

### 3.1 Herstellung eines wasserverdünnbaren grünen Metallicbasislackes

Der Basislack wird analog Beispiel 1.1 hergestellt aus

| | |
|---|---|
| 59,00 g | Bindemittellösung nach Herstellungsbeispiel 10 |
| 18,50 g | Aluminiumanteigung nach Herstellungsbeispiel 11 |
| 1,90 g | saurem Acrylatverdicker, |
| 0,26 g | N-Dimethylaminoethanol, |
| 4,80 g | Polyurethandispersion nach Herstellungsbeispiel 4 |
| 0,60 g | der in Herstellungsbeispiel 13 beschriebenen grünen Pigmentanreibung, |
| 4,00 g | n-Butanol und |
| 10,94 g | vollentsalztem Wasser. |

| | |
|---|---|
| Festkörpergehalt | 17,1 Gew.-% (120 Minuten im Umluftofen bei 120°C), |
| Viskosität | 90 - 95 mPa.s bei einem Schergefälle von 100 sec⁻¹. |

### 3.2 Aufbringen des Basislackes und eines Klarlackes

Wie in Beispiel 1.2 beschrieben, wird der Basislack aus 3.1 auf ein vorbeschichtetes Blech appliziert und nach der forcierten Trocknung mit einem handelsüblichen Acryl-Melamin-Klarlack überschichtet und bei 130°C 30 Minuten eingebrannt. Es resultiert eine grüne Metallicbeschichtung mit gleich gutem Eigenschaftsbild wie in den Beispielen 1.2 und 2.2.

### Beispiel 4

### 4.1 Herstellung eines unifarbenen, roten Basislackes

300 g eines üblichen Pastenharzes (gemäß Beispiel aus DE-OS 4 000 889) werden mit 350 g eines handelsüblichen Küpenpigmentes (Colourindex Red 168) vermischt. Mit Dimethylethanolamin wird auf pH 8,5 und durch Zugabe von deionisiertem Wasser auf einen Festkörper von 50 Gew.-% eingestellt. Danach wird in einer Perlmühle transparent ausdispergiert.

### 4.2

1,4 g eines handelsüblichen Verdickers auf Polyacrylsäurebasis (Festkörper: 10 Gew.-%, pH-Wert 7,5) werden mit 129 g der Dispersion aus Beispiel 1 und 40 g des Pastenharzes aus Beispiel 4.1 gemischt. Anschließend werden unter Rühren 24 g eines handelsüblichen, wasserunlöslichen Melaminharzes (Setamine US 138/BB 70 der Firma AKZO) unter Rühren zugesetzt. Anschließend werden 10 g der Rotpaste aus Beispiel 4.1 zugesetzt und homogen eingerührt. Mit deionisiertem Wasser wird eine Applikationsviskosität von 100 - 130 mPa.s, rotationsviskosimetrisch gemessen bei einem Schergefälle von 231 sec⁻¹ und bei 25°C eingestellt.

### 4.3 Aufbringen des Basislackes und eines Klarlackes

Der erhaltene Wasserbasislack wird auf ein übliches, phosphatiertes und durch kathodische Tauchlackierung und mit Füller vorbeschichtetes Karosserieblech durch Spritzen aufgebracht. Dies geschieht in einer Trockenschichtdicke von 30 µm. Nach der Applikation wird bei Raumtemperatur 10 Minuten abgelüftet und anschließend 10 Minuten bei 80°C vorgetrocknet. Anschließend wird ein handelsüblicher, melaminharzhärtender Autoserienklarlack auf Acrylatharzbasis in einer Trockenschichtdicke von 35 µm überlackiert und 18 Minuten bei 120°C (Objekttemperatur) getrocknet.

Man erhält eine Mehrschichtlackierung mit hervorragender Schwitzwasserbeständigkeit (DIN 50 017, 240 Stunden, 40°C).

### Beispiel 5

Herstellung einer Silber-Metallic-Zweischichtlackierung
20 g einer handelsüblichen, für Wasserbasislack geeigneten Aluminiumpaste mit 65 Gew.-% Aluminium, 20 g Butylglykol, 6 g N-Methylpyrrolidon und 1 g eines handelsüblichen Netzmittels werden miteinander zum Bronzeaufschluß vermischt. Danach werden 1,4 g eines handelsüblichen Verdickers auf Polyacrylsäurebasis (Festkörper: 10 Gew.-%, pH-Wert 7,5) hinzugemischt. Danach werden 129 g der Dispersion aus Beispiel 1 und 40 g des Pastenharzes aus Beispiel 4.1 in den Bronzeaufschluß eingerührt.

Anschließend werden unter Rühren 24 g eines handelsüblichen, wasserunlöslichen Melaminharzes (Setamine US 138/BB 70 der Firma Akzo) unter Rühren zugesetzt. Mit deionisiertem Wasser wird eine Applikationsviskosität von 100 - 130 mPa.s, rotationsviskosimetrisch gemessen bei einem Schergefälle von 231 s⁻¹ und bei 25°C, eingestellt.

Der erhaltene Wasserbasislack wird auf ein übliches, phosphatiertes und durch kathodische Tauchlackierung und mit Füller vorbeschichtetes Karosserieblech durch Spritzen aufgebracht. Dies geschieht in einer Trockenschichtdicke von 15 µm. Nach der Applikation wird bei Raumtemperatur 10 Minuten abgelüftet und anschließend 10 Minuten bei 80°C vorgetrocknet. Anschließend wird ein handelsüblicher, melaminharzhärtender Autoserienklarlack auf Acrylatharzbasis in einer Trockenschichtdicke von 35 µm überlackiert und 18 Minuten bei 120°C (Objekttemperatur) getrocknet.

Man erhält eine Mehrschichtlackierung mit hervorragender Beständigkeit gegen Schwitzwasser.

## Patentansprüche

1. Verfahren zur Herstellung einer dekorativen Mehrschichtlackierung auf einem Metallsubstrat durch elektrophoretisches Aufbringen einer Grundierungsschicht, Auftrag einer Füllerschicht, Auftrag einer farb- und/oder effektgebenden Basislackschicht aus einem wäßrigen, Polyurethan enthaltenden Basislack und Überlackieren mit einer transparenten Lackschicht, **dadurch gekennzeichnet, daß** als Basislack ein wäßriges selbstvernetzendes Überzugsmittel verwendet wird, das als Bindemittel eine wäßrige Polyurethanharzdispersion enthält auf der Basis eines linear oder verzweigt aufgebauten Polyurethanharzes mit einem Zahlenmittel der Molmasse (Mn) von 2500 bis 120000, einem Gehalt von 10 bis 400 mmol, an lateralen und/oder terminalen an Silizium gebundenen Hydroxyl- und/oder R'O-Gruppen, worin
R' = C₁ bis C₈-Alkyl oder C(O)R''', und
R''' = C₁ bis C₁₀-Alkyl,
pro 100 g Festharz, einer Hydroxylzahl von 0 bis 150 mg KOH/g bezogen auf Festharz, wobei an Silizium gebundene Hydroxylgruppen bei der Berechnung der OH-Zahl nicht mitgezählt werden, und einem Gehalt an ionischen, in ionische Gruppen überführbaren und/oder hydrophilen Gruppen von 5 bis 200 mEqu pro 100 g Festharz.

2. Verfahren nach Anspruch 1, **dadurch gekennzeichnet, daß** das Polyurethanharz einen Gehalt von 20 bis 300 mmol an lateralen und/oder terminalen an Silizium gebundenen Hydroxyl- und/oder R'O-Gruppen aufweist.

3. Verfahren nach einem der vorhergehenden Ansprüche, **dadurch gekennzeichnet, daß** die als Bindemittel enthaltene wäßrige Polyurethanharzdispersion erhältlich ist durch Umsetzung von einem linearen oder verzweigten, nicht gelierten, ionische Gruppen, zur Ionenbildung befähigte Gruppen und/oder hydrophile Gruppen enthaltenden sowie isocyanatfunktionellen Polyurethan-Prepolymers, mit einer oder mehreren Verbindungen der allgemeinen Formel
((H-X-)ₙR)ₐSi(OR')_{b}(R'')_{c} (I)
mit X = O, S, NH oder NR'^{v},
R = ein bifunktioneller, trifunktioneller oder tetrafunktioneller, organischer Rest mit einem Molekulargewicht von 13 bis 500,
R' = C₁- bis C₈-Alkyl oder C(O)R''',
R" = R''' = C₁- bis C₁₀-Alkyl
R'^{v} = C₁- bis C₈-Alkyl,
a = 1, 2 oder 3,
b = 1, 2 oder 3,
c = 0, 1 oder 2,
n = 1 bis 3,
wobei mehrere Reste R', R " und R''' gleich oder verschieden sein können und worin die Summe aus a plus b plus c vier ergibt,
gegebenenfalls im Gemisch mit einem oder mehreren NH₂- und/oder NH-Gruppen tragenden Alkanolaminen mit einer OH-Funktionalität von mindestens 1,
und Überführen des gegebenenfalls neutralisierten Reaktionsproduktes in eine wäßrige Dispersion durch Vermischen mit Wasser in mehr als zehnfachem stöchiometrischen Überschuß der zur Hydrolyse der R'OSi-Gruppen notwendigen Wassermenge.

4. Verfahren nach Anspruch 3, **dadurch gekennzeichnet, daß** das isocyanatfunktionelle Polyurethan-Prepolymer erhältlich ist durch Umsetzung in wasserfreiem Milieu von
a) mindestens einer linearen oder verzweigten Verbindung, die mindestens zwei gegenüber Isocyanat reaktive Gruppen trägt mit einem inittleren Molekulargewicht von 60 bis 10000,
b) mindestens einem organischen Polyisocyanat,
c) mindestens einer Verbindung mit mehr als einer mit Isocyanat reaktiven Gruppe, und mindestens einer ionischen Gruppe, zur Ionenbildung befähigten Gruppe und/oder hydrophilen Gruppe, mit einer zahlenmittleren Molmasse (Mn) bis zu 10000, in einem NCO/OH-Verhältnis von über 1 bis 4 : 1.

5. Verfahren nach Anspruch 4, **dadurch gekennzeichnet, daß** die lineare oder verzweigte Verbindung der Komponente a) mindestens ein Polyol auf der Basis eines oder mehrerer Polyether, Polyester, Polyurethane und/oder Polycarbonate, mit mindestens zwei OH-Gruppen im Molekül und einem Zahlenmittel der Molmasse (Mn) von 600 - 10000, gegebenenfalls unter Mitverwendung von einem oder mehreren davon unterschiedlichen zumindest difunktionellen niedermolekularen Alkoholen und/oder Aminen und/oder Aminoalkoholen mit einer Molmasse unter 600 ist.

6. Verfahren nach einem der vorhergehenden Ansprüche, **dadurch gekennzeichnet, daß** die wäßrigen Überzugsmittel für die Basislackschicht ein oder mehrere unterschiedliche selbst- oder fremdvernetzende Bindemittel in einer Menge von 0 bis 75 Gew.-% bezogen auf den gesamten Harzfestkörper enthalten.

7. Verfahren nach einem der vorhergehenden Ansprüche, **dadurch gekennzeichnet, daß** die wäßrigen Überzugsmittel für die Basislackschicht einen Festkörpergehalt von 10 bis 50 Gew.-%, bei einem Verhältnis von Pigment zu Bindemittel plus gegebenenfalls vorhandendem Vernetzer und Pastenharz von 0,03 : 1 bis 3 : 1, jeweils bezogen auf das Festkörpergewicht, aufweist.

8. Verfahren nach einem der Ansprüche 1 bis 7, **dadurch gekennzeichnet, daß** die Wasserbasislackschicht in einer Trockenschichtdicke von 8 bis 50 µm appliziert und nach einer Ablüftphase naß-in-naß mit einem üblichen Klarlack in einer Trockenschichtdicke von 30 - 60 µm überlackiert und gemeinsam mit diesem bei 20 bis 150°C getrocknet wird.

9. Verfahren nach einem der Ansprüche 1 bis 8, **dadurch gekennzeichnet, daß** es zur Mehrschichtlackierung von Kraftfahrzeugen durchgeführt wird.

## Claims

1. Method of producing a decorative multilayer lacquer coating on a metal substrate by electrophoretic application of a primer layer, application of a filler layer, application of a colour- and/or effect-giving base lacquer layer from an aqueous, polyurethane-containing base lacquer, and covering with a transparent lacquer layer, **characterised in that** the base lacquer used is an aqueous self-crosslinking coating composition containing as binder an aqueous polyurethane resin dispersion based on a polyurethane resin that is linear or branched in structure and has a number-average molar mass (Mn) of from 2500 to 120,000, a content of from 10 to 400 mmol of lateral and/or terminal silicon-bonded hydroxyl and/or R'O groups, wherein
R' = C₁- to C₈-alkyl or C(O)R''' and
R''' = C₁- to C₁₀-alkyl,
per 100 g of solid resin, a hydroxyl number of from 0 to 150 mg KOH/g, based on solid resin, silicon-bonded hydroxyl groups not being included in the calculation of the OH number, and a content of ionic groups, groups that can be converted into ionic groups, and/or hydrophilic groups of from 5 to 200 mEqu per 100 g of solid resin.

2. Method according to claim 1, **characterised in that** the polyurethane resin has a content of from 20 to 300 mmol of lateral and/or terminal silicon-bonded hydroxyl and/or R'O groups.

3. Method according to any one of the preceding claims, **characterised in that** the aqueous polyurethane resin dispersion contained as binder is obtainable by reacting a linear or branched, non-gelled, isocyanate-functional polyurethane prepolymer containing ionic groups, groups capable of ion formation and/or hydrophilic groups, with one or more compounds of the general formula
((H-X-)ₙR)ₐSi(OR')_{b}(R")_{c} (I)
wherein X = O, S, NH or NR'^{v},
R = a bifunctional, trifunctional or tetrafunctional organic radical having a molecular weight of from 13 to 500,
R' = C₁- to C₈-alkyl or C(O)R''',
R'' = R''' = C₁- to C₁₀-alkyl,
R'^{v} = C₁- to C₈-alkyl,
a = 1, 2 or 3,
b = 1, 2 or 3,
c = 0, 1 or 2,
n = from 1 to 3,
wherein a plurality of radicals R', R'' and R''' may be identical or different and wherein the sum of a plus b plus c is four,
optionally in admixture with one or more alkanolamines carrying NH₂ and/or NH groups and having an OH functionality of at least 1,
and converting the optionally neutralised reaction product into an aqueous dispersion by mixing it with water in a more than ten times stoichiometric excess of the amount of water necessary for hydrolysis of the R'OSi groups.

4. Method according to claim 3, **characterised in that** the isocyanate-functional polyurethane prepolymer is obtainable by reacting, in an anhydrous medium,
a) at least one linear or branched compound that carries at least two groups reactive towards isocyanate and has a mean molecular weight of from 60 to 10,000,
b) at least one organic polyisocyanate,
c) at least one compound that has more than one group reactive with isocyanate, and at least one ionic group, group capable of ion formation and/or hydrophilic group, and that has a number-average molar mass (Mn) of up to 10,000, in an NCO/OH ratio greater than from 1 to 4 : 1.

5. Method according to claim 4, **characterised in that** the linear or branched compound of component a) is at least one polyol based on one or more polyethers, polyesters, polyurethanes and/or polycarbonates, having at least two OH groups in the molecule and a number-average molar mass (Mn) of from 60 to 10,000, optionally with the concomitant use of one or more at least difunctional low molecular weight alcohols and/or amines and/or amino alcohols different therefrom and having a molar mass below 600.

6. Method according to any one of the preceding claims, **characterised in that** the aqueous coating compositions for the base lacquer layer contain one or more different self-crosslinking binders or binders that crosslink by external means in an amount of from 0 to 75 wt.%, based on the total resin solids.

7. Method according to any one of the preceding claims, **characterised in that** the aqueous coating compositions for the base lacquer layer have a solids content of from 10 to 50 wt.% with a ratio of pigment to binder plus optionally present crosslinking agent and paste resin of from 0.03 : 1 to 3 : 1, in each case based on the weight of the solids.

8. Method according to any one of claims 1 to 7, **characterised in that** the aqueous base lacquer layer is applied in a dry layer thickness of from 8 to 50 µm and, after a phase of exposure to air, is covered by the wet-on-wet method with a conventional clear lacquer in a dry layer thickness of from 30 to 60 µm and is dried together therewith at from 20 to 150°C.

9. Method according to any one of claims 1 to 8, **characterised in that** it is carried out for the multilayer lacquering of motor vehicles.

## Revendications

1. Procédé de fabrication d'une laque décorative multicouche sur un substrat métallique par dépôt électro-phorétique d'une couche de fond, dépôt d'une couche de filler, dépôt d'une couche de laque de base colorée et/ou à effets à partir d'une laque de base aqueuse, contenant du polyuréthane et revernissage avec une couche de laque transparente, **caractérisé en ce qu'**on utilise comme laque de base un matériau de revêtement aqueux autoréticulant, qui contient comme liant une dispersion aqueuse de résine de polyuréthane à base d'une résine de polyuréthane à structure linéaire ou ramifiée ayant une masse molaire moyenne en nombre (Mn) de 2500 à 120000, une teneur de 10 à 400 mmol, en groupes hydroxyle et/ou R'O liés au silicium en position latérale et/ou terminale, dans lesquels
R' = un groupe alkyle en C₂ à C₈ ou C(O)R" ', et
R"' = un groupe alkyle en C₁ à C₁₀,
pour 100 g de résine solide, un indice d'hydroxyle de 0 à 150 mg KOH/g par rapport à la résine solide, les groupes hydroxyle liés au silicium n'étant pas comptés dans le calcul de l'indice OH, et une teneur en groupes ioniques, transformables en groupes ioniques et/ou en groupes hydrophiles de 5 à 200 méqu. pour 100 g de résine solide.

2. Procédé selon la revendication 1, **caractérisé en ce que** la résine de polyuréthane présente une teneur comprise entre 20 et 300 mmol de groupes hydroxyle et/ou R'O liés au silicium en position latérale et/ou terminale.

3. Procédé selon l'une des revendications précédentes, **caractérisé en ce qu'**on peut obtenir la dispersion aqueuse de résine de polyuréthane contenue comme liant par réaction d'un prépolymère de polyuréthane à fonctionnalité isocyanate contenant des groupes linéaires ou ramifiés, non gélifiés, ioniques, des groupes capables de former des ions et/ou des groupes hydrophiles, avec un ou plusieurs composés de formule générale
((H-X-)ₙR)ₐSi(OR')_{b}(R")_{c} (I)
avec X = O, S, NH ou NR'^{v},
R = un résidu organique bifonctionnel, trifonctionnel ou tétrafonctionnel, ayant une masse moléculaire de 13 à 500,
R' = un groupe alkyle en C₁ à C₈ ou C(O)R" ',
R" = R" ' = un groupe alkyle en C₁ à C₁₀,
R'^{v} = un groupe alkyle en C₁ à C₈,
a = 1, 2 ou 3,
b = 1, 2 ou 3,
c = 0, 1 ou 2,
n = de 1 à 3,
plusieurs groupes R', R", R"' pouvant être identiques ou différents et la somme de a plus b plus c étant égale à quatre,
éventuellement en mélange avec une ou plusieurs alcanol-amines portant des groupes NH₂ et/ou NH ayant une fonctionnalité OH d'au moins 1,
et transformation du produit de réaction éventuellement neutralisé dans une dispersion aqueuse par mélange avec de l'eau en excès stoechiométrique de plus de dix fois la quantité d'eau nécessaire à l'hydrolyse des groupes R'OSi.

4. Procédé selon la revendication 3, **caractérisé en ce que** le prépolymère de polyuréthane à fonctionnalité isocyanate peut être obtenu par transformation en milieu anhydre de
a) au moins un composé linéaire ou ramifié, qui porte au moins deux groupes isocyanate réactifs vis à vis de l'isocyanate ayant une masse moléculaire moyenne de 60 à 10000,
b) au moins un polyisocyanate organique,
c) au moins un composé ayant plus d'un groupe réactif avec un isocyanate, et au moins un groupe ionique, pour obtenir un groupe capable de former des ions et/ou un groupe hydrophile, ayant une masse molaire moyenne en nombre (Mn) jusqu'à 10000, dans un rapport NCO/OH de plus de 1 à 4 : 1.

5. Procédé selon la revendication 4, **caractérisé en ce que** le composé linéaire ou ramifié du composant a) est au moins un polyol à base d'un ou de plusieurs polyéthers, polyesters, polyuréthanes et/ou polycarbonates, ayant au moins deux groupes OH dans la molécule et une masse molaire moyenne en nombre (Mn) de 600 - 10000, éventuellement en utilisant un ou plusieurs alcools et/ou amines et/ou aminoalcools de bas poids moléculaire au moins difonctionnels différents de ceux-ci ayant une masse molaire inférieure à 600.

6. Procédé selon l'une des revendications précédentes, **caractérisé en ce que** les agents de revêtement aqueux pour la couche de laque de base contiennent un ou plusieurs liants auto- ou hétéroréticulants en une quantité comprise entre 0 et 75 % en poids par rapport à l'ensemble de la résine solide.

7. Procédé selon l'une des revendications précédentes, **caractérisé en ce que** les agents de revêtement aqueux pour la couche de laque de base présentent une teneur en matières solides de 10 à 50 % en poids, pour un rapport de pigment par rapport au liant plus un agent de réticulation et une résine en pâte éventuellement présents de 0,03 : 1 à 3 : 1, respectivement par rapport à la masse de matières solides.

8. Procédé selon l'une des revendications 1 à 7, **caractérisé en ce que** la couche de laque à base aqueuse est appliquée en une épaisseur de couche sèche de 8 à 50 µm et est revernie humide sur humide après une phase de dégazage avec un vernis transparent usuel à une épaisseur sèche de 30 à 60 µm et est séchée en même temps que celle-ci à entre 20 et 150°C.

9. Procédé selon l'une des revendications 1 à 8, **caractérisé en ce qu'**il est utilisé pour le laquage multicouche de camions.
